(19) **Europäisches Patentamt**
**European Patent Office**
**Office européen des brevets**

(11) **EP 4 547 786 B1**

(12) **EUROPEAN PATENT SPECIFICATION**

(45) Date of publication and mention
of the grant of the patent:
**25.02.2026 Bulletin 2026/09**

(21) Application number: **23744190.2**

(22) Date of filing: **30.06.2023**

(51) International Patent Classification (IPC):
*C10G 3/00* (2006.01)       *C10G 45/62* (2006.01)
*C10G 47/02* (2006.01)       *C10G 55/06* (2006.01)
*C10G 47/36* (2006.01)       *C10G 65/12* (2006.01)
*C10G 45/72* (2006.01)       *B01J 8/00* (2006.01)
*C10G 2/00* (2006.01)        *C10G 45/64* (2006.01)
*C10L 1/02* (2006.01)        *C10L 1/06* (2006.01)

(52) Cooperative Patent Classification (CPC):
C10G 3/50; C10G 2/30; C10G 2/32; C10G 3/46;
C10G 45/50; C10G 45/62; C10G 45/64;
C10G 45/72; C10G 47/02; C10G 47/18;
C10G 47/20; C10G 47/36; C10G 65/12;
C10L 1/023; C10L 1/06;                    (Cont.)

(86) International application number:
**PCT/FI2023/050414**

(87) International publication number:
**WO 2024/003464 (04.01.2024 Gazette 2024/01)**

(54) **A GASOLINE FUEL COMPONENT**

BENZINKRAFTSTOFFKOMPONENTE

COMPOSANT D'ESSENCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: 30.06.2022  FI 20225603
30.06.2022  FI 20225604
30.06.2022  FI 20225605
30.06.2022  FI 20225606
30.06.2022  FI 20225607
30.06.2022  FI 20225608
30.06.2022  FI 20225609
02.12.2022  FI 20226071

(43) Date of publication of application:
**07.05.2025 Bulletin 2025/19**

(60) Divisional application:
**26152243.7**

(73) Proprietor: **Neste Oyj
02150 Espoo (FI)**

(72) Inventors:
• KIISKI, Ulla
06101 Porvoo (FI)
• KESKIVÄLI, Juha
06101 Porvoo (FI)
• LAMMINPÄÄ, Kaisa
06101 Porvoo (FI)
• SIREGAR, Petro
06101 Porvoo (FI)

(74) Representative: **Espatent Oy
Kaisaniemenkatu 4
00100 Helsinki (FI)**

(56) References cited:
EP-B1- 3 526 314     US-A1- 2011 319 683
US-B2- 9 039 790     US-B2- 9 567 264

- **RAMOS M J ET AL: "Hydroisomerization of different refinery naphtha streams by using a beta zeolite catalyst", FUEL PROCESSING TECHNOLOGY, ELSEVIER BV, NL, vol. 89, no. 8, 1 August 2008 (2008-08-01), pages 721 - 727, XP023176157, ISSN: 0378-3820, [retrieved on 20080304], DOI: 10.1016/J.FUPROC.2008.01.008**

(52) Cooperative Patent Classification (CPC): (Cont.)
C10G 2300/1011; C10G 2300/1014;
C10G 2300/1018; C10G 2300/202;
C10G 2300/4081; C10G 2400/02; C10G 2400/04;
C10G 2400/06; C10G 2400/08

**Description**

**TECHNICAL FIELD**

The present disclosure generally relates to gasoline fuels, more specifically to gasoline fuels comprising blend of gasoline components. The disclosure relates particularly, though not exclusively, to a novel gasoline fuel component obtainable from renewable feed.

**BACKGROUND**

This section illustrates useful background information without admission of any technique described herein representative of the state of the art.

There is an ongoing need to reduce greenhouse gas emissions and/or carbon footprint in transportation. Accordingly, interest towards renewable transportation fuels has been growing.

Processes for producing gasoline fuel components from renewable raw materials have been proposed. However, the octane ratings for such gasoline fuel components (compared to other prior art gasoline fuel components) have been relatively low. There is a need to improve quality of renewable gasoline fuel components. Particularly, there is an interest towards producing renewable gasoline fuel components that could be used in gasoline fuel compositions in elevated amounts together with further gasoline components.

US9039790 relates to the hydroprocessing of both a fatty acid or triglyceride-containing component and a paraffin-rich component, as well as hydroprocessed biofuels made from this coprocessing.

US9567264 discloses a process for producing both a diesel range product and an aviation range product from a renewable feedstock

US2011/319683 relates to converting triglycerides and fatty acids to a composition including naphtha boiling range hydrocarbons.

**SUMMARY**

It is an aim to solve or alleviate at least some of the problems related to prior art. An aim is to improve the quality of gasoline fuel components obtainable from renewable sources. The appended claims define the scope of protection. Any examples and technical descriptions of products, processes, and/or uses in the description and/or drawings not covered by the claims are presented not as embodiments of the invention but as examples useful for understanding the invention.

The present inventors have found the gasoline fuel component and embodiments thereof to provide advantages compared to prior art gasoline components. The advantages are related e.g to better blendability, higher octane ratings and better combustion properties discussed in more detail later.

Production of the gasoline fuel component may employ a certain process comprising a combination of hydroisomerisation and hydrocracking of a paraffinic feed. The present gasoline fuel component may be obtained from a process for producing renewable fuel components, said process further comprising recovery of an aviation fuel component. According to a second example aspect there is provided use of the present gasoline fuel component in a gasoline fuel composition.

According to a third example aspect there is provided a gasoline fuel composition comprising the present gasoline fuel component. Said use and gasoline fuel composition provide commercial liquid transportation fuel products, where the present gasoline fuel component may contribute to the bio-content, and provide better blendability, combustion properties and higher octane rating.

According to a fourth example aspect there is provided use of the present gasoline fuel component in feedstock(s) for industrial conversion process(es), preferably in thermal cracking feedstock(s) and/or in catalytic cracking feedstock(s), in solvent(s), in carrier(s), in dispersant composition(s), in demulsifier(s), in extractant(s), in detergent(s), in degreasing composition(s), in cleaner(s), in thinner(s), in penetrating oil(s), in anticorrosion composition(s), in multipurpose oil(s), in metal working, in agriculture, in construction, in electronics, in medical appliance(s), in composition(s) for car, electrical, textile, packaging, paper, and/or pharmaceutical industry, and/or in manufacture of intermediate(s) therefor. Different non-binding example aspects and embodiments have been illustrated in the foregoing. The embodiments in the foregoing are used merely to explain selected aspects or steps that may be utilized in different implementations.

**BRIEF DESCRIPTION OF THE FIGURES**

Some examples will be described with reference to the accompanying figures, in which:

Fig. 1 illustrates a schematic presentation of an example of a process for producing the present gasoline fuel component.

Fig. 2 illustrates a schematic presentation of another example of a process for producing the present gasoline fuel component.

**DETAILED DESCRIPTION**

In the following description, like reference signs denote like elements or steps.

All standards referred to herein are the latest revisions available at the filing date, unless otherwise mentioned.

Unless otherwise stated, regarding distillation characteristics, such as initial boiling points (IBP), final boiling points (FBP), T5 temperature (5 vol-% recovered), T10 temperature (10 vol-% recovered), T95 temperature (95 vol-% recovered), and boiling ranges, reference is made to EN ISO 3405-2019. IBP is the temperature at the instant the first drop of condensate falls from the lower end of the condenser tube, and FBP is the maximum thermometer reading obtained during the test, usually occurring after the evaporation of all liquid from the bottom of the flask. For boiling point distribution reference may also be made to GC-based method (simdis) ASTM D2887-19e1, or for gasoline range hydrocarbons to ASTM D7096-19.

As used in the context of this disclosure, a "gasoline fuel component" is the subject of the present invention and formed mainly of paraffinic hydrocarbons as defined in more detail later. It is preferably obtainable as a cut or fraction from a process or processes refining feed material through several steps and fractionating the product(s) into cuts. Typically, such gasoline fuel components boil, i.e. have IBP and FBP, within a range from about 25 °C to about 210 °C, as determined according to EN ISO 3405-2019. It is meant to provide a component usable at least with at least one other gasoline component to form a "gasoline fuel composition". Said gasoline fuel composition refers to a product which commercially could be sold as gasoline, gasoline fuel, petrol, and is usable as fuel in spark-ignition engines, said gasoline fuel compositions meeting one or more standard specifications for gasoline fuels, such as specifications laid down in EN 228-2012 + A1-2017. Typically, gasoline fuel compositions are blends of two or more gasoline fuel components.

As used in the context of this disclosure, aviation fuel component refers to hydrocarbon compositions suitable for use in fuel compositions meeting standard specifications for aviation fuels, such as specifications laid down in ASTM D7566-21. Typically, such aviation fuel components boil, i.e. have IBP and FBP, within a range from about 100 °C to about 300 °C, such as within a range from about 150 °C to about 300 °C, as determined according to EN ISO 3405-2019.

As used in the context of this disclosure, diesel fuel component refers to hydrocarbon compositions suitable for use in fuel compositions meeting standard specifications for diesel fuels, such as specifications laid down in EN 15940:2016 + A1:2018 + AC:2019 or in EN 590:2022. Typically, such diesel fuel components boil, i.e. have IBP and FBP, within a range from about 160 °C to about 380 °C, as determined according to EN ISO 3405-2019.

As used herein hydrocarbons refer to compounds consisting of carbon and hydrogen. Hydrocarbons of particular interest in the present context comprise paraffins, n-paraffins, i-paraffins, monobranched i-paraffins, multiple-branched i-paraffins, olefins, naphthenes, and aromatics. Oxygenated hydrocarbons refer herein to hydrocarbons comprising covalently bound oxygen.

As used herein paraffins refer to non-cyclic alkanes, i.e. non-cyclic, open chain saturated hydrocarbons that are linear (normal paraffins, n-paraffins) or branched (isoparaffins, i-paraffins). In other words, paraffins refer herein to n-paraffins, and/or i-paraffins.

In the context of the present disclosure, i-paraffins refer to branched open chain alkanes, i.e. non-cyclic, open chain saturated hydrocarbons having one or more alkyl side chains. Herein, i-paraffins having one alkyl side chain or branch are referred to as monobranched i-paraffins and i-paraffins having two or more alkyl side chains or branches are herein referred to as multiple-branched i-paraffins. In other words, i-paraffins refer herein to monobranched i-paraffins and/or multiple-branched i-paraffins. The alkyl side chain(s) of i-paraffins may for example be C1-C6 alkyl side chain(s), preferably methyl side chain(s). The amounts of monobranched and multiple-branched i-paraffins may be given separately. The term "i-paraffins" refers to sum amount of any monobranched i-paraffins and any multiple-branched i-paraffins, if present, indicating the total amount of any i-paraffins present regardless the number of branches. Correspondingly, "paraffins" refers to sum amount of any n-paraffins, any monobranched i-paraffins, and multiple-branched i-paraffins, if present.

In the context of the present disclosure, olefins refer to unsaturated, linear, branched, or cyclic hydrocarbons, excluding aromatic compounds. In other words, olefins refer to hydrocarbons having at least one unsaturated bond, excluding unsaturated bonds in aromatic rings.

As used herein, cyclic hydrocarbons refer to all hydrocarbons containing cyclic structure(s), including cyclic olefins, naphthenes, and aromatics. Naphthenes refer herein to cycloalkanes i.e. saturated hydrocarbons containing at least one cyclic structure, with or without side chains. As naphthenes are saturated compounds, they are compounds without aromatic ring structure(s) present. Aromatics refer herein to hydrocarbons containing at least one aromatic ring structure, i.e. cyclic structure having delocalized, alternating $\pi$ bonds all the way around said cyclic structure.

In the context of the present disclosure, for compositions boiling at <250°C (at standard atmospheric pressure), contents of n-paraffins, i-paraffins, monobranched i-paraffins, various multiple-branched i-paraffins, olefins, naphthenes, and aromatics are expressed as weight-% (wt-%) relative to the weight of the feed, stream, effluent, product, component or sample in question, or, when so defined, as weight-% (wt-%) relative to the (total) weight of paraffins, or (total) weight of i-paraffins of the feed, stream, effluent, product, component, or sample in question. Said contents may be determined by GC-FID/GC-MS method, preferably conducted as follows: GC-FID as disclosed in ASTM D6839 was run using parameters: column ZB-1 60m, ID 0.25mm, df 1.0 microns, or similar; oven 0°C (2 min) - 1.5 °C/min 300 °C (5 min); injector and detector 300 °C; carrier gas helium 1.0 ml/min; detector gases $H_2$ 35 ml/min and air 350 ml/min; make up flow helium 30ml/min; split flow 165:1 (165 ml/min). Individual compounds were identified using GC-MS (run parameters: ion source 230°C; interface 280 °C; scan 25 - 280 m/z; scan speed 303; scan event time 0.88). Commercial tools (Shimadzu LabSolutions/GCMSSolutions and Agilent OpenLab) were used for identification of the detected compounds or hydrocarbon groups, and for determining their mass concentrations by application of response factors relative to n-heptane to the areas of detected peaks followed by normalization to 100 wt-% (for the liquid volume concentrations: by application of density factors to the calculated mass concentration of the detected peaks followed by normalization to 100 vol-%). Cyclic olefins are lumped with naphthenes. The limit of quantitation for individual compounds of this method is 0.1 wt-%.

In the context of the present disclosure, for hydrocracking feeds and other compositions of similar boiling range, contents of n-paraffins, i-paraffins, monobranched i-paraffins, various multiple-branched i-paraffins, naphthenes, and aromatics, are expressed as weight % (wt-%) relative to the degassed weight of the feed stream, effluent, product, component or sample in question, or, when so defined, as weight % (wt-%) relative to the (total) weight of paraffins or (total) weight of i-paraffins of the feed, stream, effluent, product, component, or sample in question. Said contents may be determined by GCxGC-FID/GCxGC-MS method, preferably conducted as follows: GCxGC (2D GC) method was run as generally disclosed in UOP 990-2011 and by Nousiainen M. in the experimental section of his Master's Thesis Comprehensive two-dimensional gas chromatography with mass spectrometric and flame ionization detectors in petroleum chemistry, University of Helsinki, August 2017, with the following modifications: The GCxGC was run in reverse mode, using a semipolar column (Rxi17Sil) first and a non-polar column (Rxi5Sil) thereafter, followed by FID detector, using run parameters: carrier gas helium 31.7 cm/sec (column flow at 40 °C 1.60 ml/min); split ratio 1:350; injector 280 °C; column T program 40 °C (0 min) - 5 °C/min - 250 °C (0 min) 10 °C/min - 300 °C (5 min), run time 52 min; modulation period 10 sec; detector 300 °C with $H_2$ 40 ml/min and air 400 ml/min; makeup flow helium 30 ml/min; sampling rate 250 Hz and injection size 0.2 microliters. Individual compounds were identified using GCxGC-MS, with MS-parameters: ion source 230 °C; interface 300 °C; scan range 25 - 500 amu; event time (sec) 0.05; scan speed 20000. Commercial tools (Shimadzu's LabSolutions, Zoex's GC Image) were used for data processing including identification of the detected compounds or hydrocarbon groups, and for determining their mass concentrations by application of response factors relative to n-heptane to the volumes of detected peaks followed by normalization to 100 wt-%. Olefins were lumped with naphthenes and heteroatomic species with aromatics, unless separately reported. The limit of quantitation for individual compounds of this method is 0.1 wt-%.

In the context of the present disclosure, various characteristics of the feeds, streams, effluents, products, components, or samples are determined according to the standard methods referred to or disclosed herein, as properly prepared. For example, cloud point is determined according to ASTM D 5771-17 from a degassed feed, stream, effluent, product, component, or sample.

In the context of this disclosure, feed(s) to reaction section(s), particularly to the first reaction section and/or the second reaction section, are defined so that $H_2$ possibly fed to the respective reaction section, for example $H_2$ fed to hydroisomerisation and/or $H_2$ fed to hydrocracking, is excluded from the definition of the feed(s).

As used herein, hydroisomerisation (HI) effluent refers to total HI effluent, degassed HI effluent, or degassed and stabilised HI effluent, as the case may be, and the term HI effluent may encompass each of these.

In the context of this disclosure, CX+ paraffins, CX+ n-paraffins, CX+ i-paraffins, CX+ monobranched i-paraffins, CX+ multiple-branched i-paraffins, CX+ hydrocarbons, or CX+ fatty acids refer to paraffins, n-paraffins, i-paraffins, monobranched i-paraffins, multiple-branched i-paraffins, hydrocarbons, or fatty acids, respectively, having a carbon number of at least X, where X is any feasible integer. It is understood that every compound falling within the definition is not necessarily present.

In the context of this disclosure, CY- paraffins, CY- n-paraffins, CY- i-paraffins, CY- monobranched i-paraffins, CY- multiple-branched i-paraffins, CY- hydrocarbons, or CY- fatty acids refer to paraffins, n-paraffins, i-paraffins, mono-branched i-paraffins, multiple-branched i-paraffins, hydrocarbons, or fatty acids, respectively, having a carbon number of at most Y, wherein Y is any feasible integer. In the context of this disclosure, $CX_Y$-$CX_Z$ (or $CX_Y$ to $CX_Z$) paraffins, $CX_Y$-$CX_Z$ n-paraffins, $CX_Y$-$CX_Z$ i-paraffins, $CX_Y$-$CX_Z$ mono-branched i-paraffins, $CX_Y$-$CX_Z$ multiple-branched i-paraffins, $CX_Y$-$CX_Z$ hydrocarbons, or $CX_Y$-$CX_Z$ fatty acids refer to a range of paraffins, n-paraffins, i-paraffins, mono-branched i-paraffins, multiple-branched i-paraffins, hydrocarbons, or fatty acids respectively, where $X_Y$ and $X_Z$ are feasible end-value integers, wherein the carbon numbers within such range is as indicated by the end-value integers and any integers between said end-values, if present. However, paraffins, n-paraffins, i-paraffins, mono-branched i-paraffins, multiple-branched i-paraffins, hydrocarbons, or fatty acids, as the case may be, of all said carbon numbers within said range, particularly at or around the end points, may not necessarily be present (except when so expressly indicated). On the other hand, isomers, by definition, may comprise several compounds having the same carbon number, such as C9 isomers, may comprise methyl octanes (different positions of the methyl-branch), dimethyl heptanes (different positions of the two methyl-branches), etc, wherein "C9 isomers" comprises the sum amount of all such variants. Typically, a sum amount as of weight or volume of paraffins, n-paraffins, i-paraffins, mono-branched i-paraffins, multiple-branched i-paraffins, hydrocarbons, or fatty acids, as defined each time, of all carbon numbers included is meant. For example, C4-C9 n-paraffins refers to any n-paraffins within said range, such as C4, C5, C6, C7, C8, and C9 n-paraffins, even if the content of C9 n-paraffins was zero. In other words, a sum amount is obtainable by addition of 0 (referring to absent C9 n-paraffins) to the sum weight of all other C4 to C9 n-paraffins present.

Isomerisation converts at least a certain amount of n-paraffins to i-paraffins, especially to mono-branched i-paraffins. By (further) raising the isomerization degree, for example by increasing severity of the hydroisomerisation as described hereinafter, more n-paraffins can be converted to i-paraffins, and mono-branched i-paraffins can be converted to multiple-branched i-paraffins, such as di-branched, tri-branched i-paraffins, even i-paraffins comprising more than three branches.

As used herein and in the context of the second reactor section, degree of effective cracking refers to cracking that yields non-gaseous (NTP) cracking products, especially as expressed as the ratio of the C8 to C14 hydrocarbon content in the hydrocracking effluent to the C8 to C14 hydrocarbon content in the second reactor section feed.

As used herein, the term renewable refers to compounds or compositions that are obtainable, derivable, or originating from plants and/or animals, including compounds or compositions obtainable, derivable, or originating from fungi and/or algae, in full or in part. As used herein, renewable compounds or compositions may comprise gene manipulated compounds or compositions. Renewable feeds, components, compounds, or compositions may also be referred to as biological feeds, components, compounds, or compositions, or as biogenic feeds, components, compounds, or compositions.

As used herein, the term fossil refers to compounds or compositions that are obtainable, derivable, or originating from naturally occurring non-renewable compositions, such as crude oil, petroleum oil/gas, shale oil/gas, natural gas, or coal deposits, and the like, and combinations thereof, including any hydrocarbon-rich deposits that can be utilized from ground/underground sources. The term circular refers to recycled material typically originating from non-renewable sources. For example, the term circular may refer to recycled material originating from waste plastics.

Said renewable, circular, and fossil compounds or compositions are considered differing from one another based on their origin and impact on environmental issues. Therefore, they may be treated differently under legislation and regulatory framework. Typically, renewable, circular, and fossil compounds or compositions are differentiated based on their origin and information thereof provided by the producer.

Chemically the renewable or fossil origin of any organic compounds, including hydrocarbons, can be determined by suitable method for analyzing the content of carbon from renewable sources e.g. DIN 51637 (2014), ASTM D6866 (2020), or EN 16640 (2017). Said methods are based on the fact that carbon atoms of renewable or biological origin comprise a higher number of unstable radiocarbon ($^{14}$C) atoms compared to carbon atoms of fossil origin. Therefore, it is possible to distinguish between carbon compounds derived from renewable or biological sources or raw material and carbon compounds derived from non-renewable or fossil sources or raw material by analyzing the ratio of $^{12}$C and $^{14}$C isotopes. Thus, a particular ratio of said isotopes can be used as a "tag" to identify a renewable carbon compound and differentiate it from non-renewable carbon compounds. The isotope ratio does not change in the course of chemical reactions. Therefore, the isotope ratio can be used for identifying renewable compounds, components, and compositions and distinguishing them from non-renewable, fossil materials in reactor feeds, reactor effluents, separated product fractions and various blends thereof. Numerically, the biogenic carbon content can be expressed as the amount of biogenic carbon in the material as a weight percent of the total carbon (TC) in the material (in accordance with ASTM D6866 (2020) or EN 16640 (2017)).

In the present context, the term renewable preferably refers to a material having a biogenic carbon content of more than 50 wt-%, especially more than 60 wt-% or more than 70 wt-%, preferably more than 80 wt-%, more preferably more than 90 wt-% or more than 95 wt-%, even more preferably about 100 wt-%, based on the total weight of carbon in the material (EN 16640 (2017)).

According to a first aspect, herein is provided a gasoline fuel component comprising n-paraffins, monobranched i-paraffins, and multiple-branched i-paraffins, wherein the sum amount of C4-C9 n-paraffins, C4-C9 mono-branched i-paraffins and C4-C9 multiple-branched i-paraffins is more than 90 wt-% of the total gasoline fuel component weight, and wherein the weight ratio of C8 i-paraffins to C8 n-paraffins is at least 4.0.

The gasoline fuel component is highly paraffinic, mainly comprising n-paraffins, monobranched i-paraffins, and multiple-branched i-paraffins. The carbon number distribution may be relatively broad, but is typically limited by the boiling points of hydrocarbons therein, as the gasoline fuel component is preferably recovered as a distillation fraction. In any case, the carbon number distribution of the paraffins in the gasoline fuel component covers typically at least three adjacent carbon numbers, preferably at least four adjacent carbon numbers, more preferably at least five adjacent carbon numbers, within the C4-C9 range.

The gasoline fuel component is characterized by the sum amount of C4-C9 n-paraffins, C4-C9 mono-branched i-paraffins, and C4-C9 multiple-branched i-paraffins, which in total is more than 90 wt-% of the total gasoline fuel component weight. However, it should be noted that said sum amount is defined adding together the amounts of any paraffins having relevant carbon numbers (i.e. falling within said carbon number range, including end points) found in analysis. On the other hand, it should not be understood as necessarily indicating presence of paraffins having all carbon numbers falling within said range.

C8 paraffins are usable in gasoline fuels and may be present in varying amounts in highly paraffinic gasoline components, depending inter alia on the distillation end points used in the recovery of the gasoline fractions. However, the RON of n-C8 is as low as -20 so its presence can be detrimental to the octane rating of the gasoline fuel component. Eliminating all C8 paraffins from the recovered gasoline fuel component e.g. by reducing the FBP of the gasoline fuel component would cause unacceptable yield reduction of said component. Surprisingly, it was found that by controlling the weight ratio of C8 i-paraffins to C8 n-paraffins to be at least 4.0, preferably at least 4.5, further preferably at least 5.0, more preferably at least 5.5, even more preferably at least 6.0, and preferably at most 70, further preferably at most 60, more preferably at most 50, even more preferably at most 40, typically at most 30, or at most 25, or at most 20, it is possible to obtain components with good octane ratings without a need to eliminate C8 paraffin content. To the contrary, C8 paraffins may be incorporated in substantial amounts, typically at least 1.0 wt-%, preferably at least 2.5 wt-%, further preferably at least 5.0 wt-%, more preferably at least 5.5 wt-%, even more preferably at least 6.0 wt-%, or most preferably at least 7.0 wt-%, typically up to 50 wt-%, or up to 40 wt-%, or up to 30 wt-%, or up to 25 wt-%, such as from 4.0 to 50 wt-%, or from 4.5 to 50 wt-%, or from 5.0 to 40 wt-% of the total gasoline fuel component weight without destroying the component's octane rating, provided the ratio of C8 i-paraffins to C8 n-paraffins as defined above is met. C8 n-paraffins may be included in the present gasoline fuel component in non-negligible amounts, typically at least 0.1 wt-%, more preferably at least 0.3 wt-%, more preferably at least 0.5 wt-%, even more preferably at least 0.6 wt-% C8 n-paraffins, while still having good or sufficient octane rating, provided that the ratio of C8 i-paraffins to C8 n-paraffins is as defined above. Actually, even significant improvement may be seen compared to conventional paraffinic gasoline components. With the ratio of C8 i-paraffins to C8 n-paraffins being as defined above, C8 n-paraffins content may even be 1.0 wt-% or more, 1.5 wt-% or more, 2.0 wt-% or more, 2.5 wt-% or more, or even 3.0 wt-% or more, while still providing acceptable octane rating, as shown by the Examples.

In general, C7 paraffins are abundant in highly paraffinic gasoline components due to distillation processes for recovery of gasoline fractions. Defining embodiments of the present gasoline fuel component by its C7 paraffins content highlights interesting qualities. In certain embodiments, in total, the amount of C7 paraffins of the total gasoline fuel component weight is at least 15 wt-%, preferably at least 20 wt-%, such as within a range from 15 wt-% to 40 wt-%, or from 15 wt-% to 35 wt-%, or from 15 wt-% to 30 wt-%. C7 paraffins refers to the sum amount of C7 n-paraffins, C7 mono-branched i-paraffins, and C7 multiple-branched i-paraffins. Nevertheless, the octane rating for n-heptane, the C7 n-paraffin, is 0, which lowers the RON and MON values of the gasoline fuel component and eventual gasoline fuel composition.

Therefore, it is beneficial to have as high i-C7/n-C7 ratio as feasible, to improve the RON of the gasoline fuel component. In certain embodiments, the weight ratio of C7 i-paraffins to C7 n-paraffins (i-C7/n-C7 ratio) is at least 2.7, preferably at least 2.8, preferably at least 2.9, preferably at least 3.0, preferably at least 3.1, preferably at least 3.2, preferably at least 3.4. It has been found that in highly paraffinic compositions such i-C7/n-C7 ratios may be an indication of a particularly high-quality gasoline component, as shown by the Examples. In practice, an upper limit for said ratio stems from reasonable isomerisation degree, so that said ratio may be at most 5.0 or at most 10. Hence, said ratio may vary from 2.7 to 10, such as from 3.4 to 5.0. Conventional paraffinic gasoline fuel components, such as those derived from hydrodeoxygenation of vegetable oils, tend to have lower i-paraffin contents, especially for lower carbon numbers, such as C7.

Yet another single carbon number of interest is C6, and here again, it is beneficial to keep the C6 n-paraffin, the n-hexane, content low, to improve the RON, and also due to its suspected properties of concern to health and/or environment. Accordingly, in certain embodiments, the C6 n-paraffin content of the gasoline fuel component is at most 11 wt-%, at most 9 wt-%, at most 8 wt-% of the total gasoline fuel component weight, such as from 0.5 wt-% to 11 wt-% or from 0.5 wt-% to 8 wt-% of the total gasoline fuel component weight. The total amount of C6 paraffins in the gasoline fuel component is typically at least 10 wt-%, and at most 40 wt-% of the total gasoline fuel component weight. With higher total C6 paraffin contents also the absolute C6 n-paraffin contents tend to be higher, but in any case, in the present gasoline fuel components the weight ratio of C6 i-paraffins to C6 n-paraffin is preferably more than 1.0.

Even though C6 represents a typical carbon number for any hydrocarbon-based gasoline, the present gasoline component may be specifically advantageous because of relatively high i-paraffin content, which may apply to C6 paraffins as well. In such embodiments, even though the C6 paraffins were abundant, the n-hexane content is not worryingly high because of highly i-paraffinic composition. The relatively high i-paraffin content in relation to the n-paraffin content for carbon number 6 paraffins may be given as the weight ratio of C6 i-paraffins to C6 n-paraffins. Therefore, in certain embodiments, the present gasoline fuel component can be characterized by the weight ratio of C6 i-paraffins to C6 n-paraffins being at least 1.5, preferably at least 1.7, and more preferably at least 2.0.

Preferably, the present gasoline fuel component comprises C4 n-paraffins at least 0.5 wt-%, further preferably at least 1.0 wt-%, more preferably 1.5 wt-%, even more preferably at least 3.0 wt-%, most preferably at least 5.0 wt-%, typically up to 10.0 wt-%, based on the total weight of the gasoline fuel component. Typically, the total content of C4 paraffins in the present gasoline fuel component is at least 1.0 wt-%, even at least 5.0 wt-% or at least 7.0 wt-%, typically up to 15 wt-%, based on the total weight of the gasoline fuel component. The present gasoline fuel component may comprise non-negligible amounts of C4 n-paraffins and/or C4 total paraffins without compromising vapor pressure and/or other properties. A higher share of C4 paraffins may allow increasing the yield of the gasoline fuel component, especially when the gasoline fuel component is recovered from fractionation.

Typical embodiments of the present gasoline fuel component may comprise at least C6, C7 and C8 paraffins. Considering the i-paraffin content in relation to the n-paraffin content for carbon numbers 6-8, these embodiments can be characterized by the weight ratio of C6-C8 i-paraffins to C6-C8 n-paraffins being at least 2.7, preferably at least 2.8 and more preferably at least 3.0. As seen in the Examples, C6, C7 and C8 may in certain embodiments be the most abundant carbon numbers of the gasoline fuel component. Hence, the weight ratio of C6-C8 i-paraffins to C6-C8 n-paraffins gives a very good representation of such embodiments of the present gasoline fuel component. Having such a high isomerization degree within this carbon number range C6-C8, is by no means typical for prior art gasoline cuts. Furthermore, as RON of n-C6 paraffin is 25, of n-C7 paraffin 0 and of n-C8 paraffin -20, their presence may be detrimental to octane rating of the gasoline fuel component. Eliminating all C8 paraffins let alone all C7 and C8, and even C6 paraffins, e.g. by reducing FBP of the component, would cause unacceptable yield reduction of the component. Surprisingly, it was found that by controlling the weight ratio of C6-C8 i-paraffins to C6-C8 n-paraffins as specified provides components with good octane ratings without a need to eliminate or even practically minimize content of C7 and C8 paraffins. To the contrary, C6-C8 paraffins may be incorporated in elevated amounts without destroying gasoline fuel component's octane rating. Preferably, the sum amount of C6-C8 n-paraffins and C6-C8 i-paraffins is at least 50 wt-%, more preferably at least 55 wt-%, even more preferably at least 58 wt-% of the total gasoline fuel component weight, typically up to 95 wt-%, or at most 90 wt-%, or at most 85 wt-% of the total gasoline fuel component weight. Such sum amounts of C6-C8 n-paraffins and C6-C8 i-paraffins in the gasoline fuel component may provide significant improvement over conventional paraffinic gasoline components.

Another feature correlating with desired characteristics of the gasoline fuel component is the weight ratio of the sum amount of C6-C9 multiple-branched i-paraffins to the sum amount of C6-C9 n-paraffins. According to certain preferred embodiments, said weight ratio of C6-C9 multiple-branched i-paraffins to C6-C9 n-paraffins is at least 0.2, preferably at least 0.3, more preferably at least 0.4, even more preferably at least 0.5. Said ratio may be up to 1.5 or even up to 2.0. An elevated weight ratio of C6-C9 multiple-branched i-paraffins to C6-C9 n-paraffins improves the RON of the highly paraffinic gasoline fuel component significantly. Compared to monobranched i-paraffins, multiple-branched i-paraffins are more effective in compensating low RON of n-paraffins. Conventional gasoline components derived from hydrodeoxygenation of vegetable oils have lower multiple-branched i-paraffin contents. While the octane number for n-heptane is zero, both RON and MON for n-C8 and n-C9, namely n-octane and n-nonane, are even lower, below zero.

Gasoline fuel component that is highly isomerised has been found to provide benefits related to octane ratings over n-paraffinic compositions. Hence, according to certain preferred embodiments, the gasoline fuel component comprises at least 50 wt-%, preferably at least 55 wt-%, more preferably at least 60 wt-%, even more preferably at least 65 wt-% C4-C9 i-paraffins of the total gasoline fuel component weight, and/or at least 5 wt-%, preferably at least 6 wt-%, more preferably at least 7 wt-%, even more preferably at least 10 wt-%, or at least 11 wt-% C6-C9 multiple-branched i-paraffins of the total gasoline fuel component weight. Hence, in such embodiments, the gasoline fuel component is predominantly i-paraffinic, and a notable part of said i-paraffins may contain more than one branch. Gasoline fuel components having such contents of C4-C9 i-paraffins and/or C6-C9 multiple-branched i-paraffins significantly improve the RON of the (highly paraffinic) gasoline fuel component, compared to conventional gasoline components derived from hydrodeoxygenation of vegetable oils that may have elevated i-paraffin contents, but lower multiple-branched i-paraffin contents, especially for said lower carbon numbers.

The research octane number and the motor octane number, RON and MON respectively, may be measured for the neat gasoline component or for the gasoline component blended with another gasoline component having a known octane number, then given as bRON and bMON, respectively. Acronyms RON, bRON, MON and bMON as used throughout this text refer to measured RON, bRON, MON and bMON after correction, i.e. they are the corrected values obtained after subtracting 0.2 from the measured values (in accordance with section 5.6 of EN228:2012 amended 2017). Throughout this text clean research and motor octane numbers are meant, i.e. as achieved without using octane number boosting additives. A standard method for RON and MON measurements is given e.g. in ASTM D2699/D2700. Measuring and calculating bRON is known in the field and has been published for example in US4244704A. In the experimental part of the present disclosure, gasoline fuel component according to the present disclosure was studied in blends with a typical gasoline component. Surprisingly, the bRON and bMON results for the gasoline fuel component according to the present disclosure were significantly better than for another renewable paraffinic gasoline component used as a reference in said experiments. The poor octane ratings of the reference gasoline component set a limitation for its use in blends, because too high amount thereof in a gasoline composition would cause the octane ratings falling short of target. Therefore, compared to said reference renewable gasoline component, a larger share of the present gasoline fuel component may be incorporated into gasoline fuel composition without compromising the target octane. Hence, according to certain embodiments, the gasoline fuel component has a bRON of at least 51, preferably at least 55. According to certain embodiments, the gasoline fuel component has a bMON of at least 48, preferably at least 50, even at least 55.

The present inventors have also found that the present gasoline fuel component comprising high content of paraffins within carbon number range C4-C9 may be highly beneficial in comparison to prior art gasoline components for several reasons. For example, the highly paraffinic gasoline fuel components of the present disclosure have naturally low total content of other compounds than paraffins. For example, total content of aromatics, olefins and naphthenes is typically less than 5.0 wt-%, such as less than 4.0 wt-%, often at most 3.0 wt-%, of the total gasoline fuel component weight. Among these, total content of aromatics is typically less than 3.0 wt-%, often less than 2.0 wt-% of the total gasoline fuel component weight. The low aromatics content contributes e.g. to reducing deposit formation in engines and injectors. All in all, incorporation of the highly paraffinic gasoline fuel component in blends supports meeting standards, such as EN 228, particularly considering limits for aromatics and benzene. High paraffins content may also provide ready biodegradability. Further, the highly paraffinic gasoline fuel components may provide better performance regarding burning and/or emissions to the end user. Further, the blendability of the present gasoline fuel component to other typical gasoline components is very good. Further, the highly paraffinic gasoline fuel component is more stable or more inert e.g. during storage and in blends, compared to components with higher content of non-paraffinic compounds, particularly of olefins, that might react and form high molecular weight precipitates, i.e. gums, in the component or in gasoline fuel composition thereof. Typically, the total content of olefins is less than 1000 vol-ppm of the total gasoline fuel component weight. Also, aromatics can be susceptible to instability, particularly with increasing aromatic size and concentration, resulting in a higher deposition propensity upon stressing e.g. caused by oxidation and molecular growth of the aromatics. Improved stability is particularly desired property e.g. for hybrid vehicles using another primary power source, such as electricity or gas, and gasoline only as a secondary fuel which is retained in the fuel system for longer periods. Additionally, a range of paraffins, such as a range within C4-C9, is more beneficial for the end product properties when blended to other typical gasoline components than a neat or pure component, such as neat n-heptane.

Hence, according to certain preferred embodiments, in the present gasoline fuel component the sum amount of C4-C9 n-paraffins, C4-C9 mono-branched i-paraffins, and C4-C9 multiple-branched i-paraffins is more than 93 wt-%, preferably more than 95 wt-%, more preferably from 95 to 99 wt-% of the total gasoline fuel component weight.

When the content of paraffins within carbon number range C4-C9 is high, the total amount of any hydrocarbons with 3 carbon atoms or less (C3- hydrocarbons), namely C1-C3 hydrocarbons, is low, typically at most 4.0 wt-%, or at most 3.5 wt-%, or at most 3.0 wt-% of the total gasoline fuel component weight. Limiting the presence of light hydrocarbons, namely hydrocarbons with 3 carbon atoms or less, improves handling of the component and any products, such as gasoline fuel compositions, thereof.

By studying the paraffins within carbon number range C4-C9 of the present gasoline fuel component further, the present inventors also defined average carbon numbers for n-paraffins and i-paraffins within said carbon number range. According to certain embodiments of the gasoline fuel component, the average carbon number of C4-C9 n-paraffins is at most 6.0, preferably at most 5.6. Preferably, the average carbon number falls between 5.0 and 6.0 or within a range from 5.0 to 6.0. Compared to the average carbon number of the C4-C9 i-paraffins in the gasoline fuel component, the C4-C9 n-paraffins have an average carbon number which is at least 0.5 units lower, preferably at least 0.6 units lower than the average carbon number of corresponding C4-C9 i-paraffins. This was found to contribute to octane numbers so that the lower the average carbon number of C4-C9 n-paraffins, the higher the RON of the gasoline fuel component. The average carbon number for i-paraffins was found to be higher and thus, according to certain embodiments, the average carbon number of C4-C9 i-paraffins is more than 6.0, preferably at least 6.2, more preferably within the range from 6.2 to 8.0. RON of n-paraffins tend to increase along decreasing carbon number. For example, n-C8 and n-C9 have RON -20 or less, n-C7 has RON of 0, n-C6 has RON of 25, n-C5 has RON of 62 and n-C4 has RON of 94. Additionally, RON of paraffins tend to increase along increasing degree of branching, mono-branched i-paraffins having somewhat higher and multiple-branched i-paraffins significantly higher octane numbers compared to n-paraffins of the same carbon number. Reducing the average carbon number of C4-C9 range paraffins in the component e.g. by reducing component's FBP, would cause unacceptable yield reduction. Also, increasing the degree of branching up to the hilt would be uneconomical, and also unnecessary. Surprisingly it was found that by controlling the average carbon number of C4-C9 n-paraffins and/or C4-C9 i-paraffins as specified above, it is possible to provide gasoline fuel components with good octane ratings without a need to reduce the FBP excessively or to increase the degree of branching up to the hilt.

The present gasoline fuel component is obtainable by a process, defined in detail later, from a renewable feedstock providing a high bio-content for the products thereof. The biogenic carbon content may be defined for any feasible composition according to EN 16640 (2017). According to certain embodiments, the biogenic carbon content of the gasoline fuel component is at least 50 wt-%, preferably at least 70 wt-%, more preferably at least 90 wt-%, or at least 95 wt-%, or even about 100 wt-%, based on the total weight of carbon (TC) in the gasoline fuel component. The present gasoline fuel component contributes to the bio-content of the total gasoline fuel composition, advantageously increasing its bio-content.

The present gasoline fuel component may be obtained as a fraction recovered from a process developed for production of high-quality liquid transportation fuel components, specifically optimised for yielding renewable and/or sustainable aviation fuels, as illustrated by the Examples. In certain preferred embodiments, an aviation fuel component is recovered in addition to said gasoline fuel component from the fractionation, both usable as liquid transportation fuel components. The combined recovery of the gasoline fuel component and the aviation fuel component provides efficient use of the feed to the process and higher value products from refining. Generally, gasoline fuel and aviation fuel may have relatively small overlap with regard to boiling points and hydrocarbon distribution. Hence, the present gasoline fuel component and a (renewable) aviation fuel component, may be recovered from fractionation, e.g by distillation, as subsequent cuts. Additionally, process choices improving the aviation fuel component quality, e.g. hydrocracking an isomerized paraffin stream, improve the gasoline fuel component quality as well, particularly blendability, octane ratings, and combustion properties.

The present gasoline fuel component's beneficial characteristics, especially the elevated i-paraffin/n-paraffin ratio in lower carbon number paraffins, may be contributed by the production process and a feed thereto. The gasoline fuel component may be directly obtainable or obtained from product recovery of the production process.

In certain embodiments, the gasoline fuel component is obtainable or obtained by a process comprising providing a paraffinic hydrocarbon feed, preferably obtained by hydrodeoxygenation of an oxygenated hydrocarbon feed typically comprising vegetable oils, animal fats, and/or microbial oils and optionally followed by gas-liquid separation and/or paraffinic feed fractionation(s), and subjecting the paraffinic hydrocarbon feed to at least hydroisomerisation, preferably to hydroisomerisation and hydrocracking, followed by fractionation, and recovering from the fractionation at least the gasoline fuel component. The feed(s) and process steps, especially the paraffinic hydrocarbon feed, the hydroisomerisation and the optional hydrocracking, and the fractionation, are preferably as further defined herein.According to certain preferred embodiments, the present gasoline fuel component is obtainable or obtained by a process comprising

providing a paraffinic hydrocarbon feed comprising at least 60 wt-% paraffins of the total weight of the paraffinic hydrocarbon feed, of which paraffins at most 30 wt-% are i-paraffins;

subjecting the paraffinic hydrocarbon feed in a first reaction section, preferably in a first reactor, to hydroisomerisation in the presence of a hydroisomerisation catalyst to obtain a hydroisomerisation effluent;

subjecting a second reaction section feed comprising at least a portion of the hydroisomerisation effluent to hydrocracking in a second reaction section, preferably in a second reactor, in the presence of a hydrocracking catalyst to obtain a hydrocracking effluent;

subjecting the hydrocracking effluent, and optionally (at least) a portion of the hydroisomerisation effluent, to fractionation, and recovering from the fractionation at least the gasoline fuel component, and optionally an aviation fuel component.

Optionally, also other products, such as a diesel fuel component, may be recovered.

Preferably, the process further comprises recovering from the fractionation a recycle stream, preferably having a T5 temperature (5 vol-% recovered, EN ISO 3405-2019) of 270 °C or higher, and optionally comprising C16 n-paraffins. The recycle stream may be comprised in the at least a portion of the hydroisomerisation effluent, or form the at least a portion of the hydroisomerisation effluent subjected to hydrocracking in the second reaction section, preferably second reactor. In other words, the recycle stream may be subjected, as part of the second reaction section feed, to hydrocracking in the second reaction section, preferably in the second reactor. The recycle stream may comprise at least a portion of the fractionation bottom. In embodiments where a recycle stream is separated, the yield of desired liquid fuel component(s) can be further optimised, particularly in embodiments where the second reaction section feed fed to hydrocracking comprises in addition to the recycle stream a further portion of the hydroisomerisation effluent. In embodiments where a recycle stream is separated, a diesel fuel component may be conveniently recovered by separating a portion from the recycle stream.

In the present process, the paraffinic hydrocarbon feed comprises at least 60 wt-%, preferably at least 70 wt-%, more preferably at least 80 wt-%, even more preferably at least 90 wt-% paraffins of the total weight of the paraffinic hydrocarbon feed. The paraffinic hydrocarbon feed of the present disclosure may comprise even at least 95 wt-% paraffins of the total weight of the paraffinic hydrocarbon feed or consist essentially of paraffins. The paraffinic hydrocarbon feed of the present disclosure may contain minor amounts of olefins, preferably less than 5 wt-%, more preferably less than 1 wt-%, based on the total weight of the paraffinic hydrocarbon feed, as well as minor amounts of aromatics and/or naphthenes.

An advantage of using a highly paraffinic hydrocarbon feed in the process of the present disclosure is that paraffins are isomerised relatively easily and at milder conditions when subjected to hydroisomerisation compared to e.g.

cyclic hydrocarbons. Also, paraffins crack relatively easily and at milder conditions when subjected to hydrocracking, which helps to reduce formation of light gases.

In the present process, the paraffinic hydrocarbon feed comprising at least 60 wt-% paraffins of the total weight of the paraffinic hydrocarbon feed, of which paraffins at most 30 wt-% are i-paraffins, may be obtained from a paraffinic hydrotreatment effluent, such as a hydrodeoxygenation (HDO) effluent, a paraffinic Fischer-Tropsch (FT) effluent, or a combination thereof, after having subjected said effluent(s) at least to gas-liquid separation, i.e. removal of at least compounds that are gaseous at NTP, and optionally also to paraffinic feed fractionation(s). While e.g. paraffinic FT effluents of fossil origin are readily available (in addition to FT effluents of renewable origin), preferably the paraffinic hydrocarbon feed of the present disclosure is at least partially renewable, i.e. comprises biogenic components.

Preferably, the paraffinic hydrocarbon feed of the present disclosure comprises or consists essentially of a hydrodeoxygenation (HDO) effluent, or a fraction thereof, such as a degassed hydrodeoxygenation effluent or a fraction thereof, from catalytic hydrodeoxygenation (catalytic HDO) of an oxygenated hydrocarbon feed. Preferably the oxygenated hydrocarbon feed comprises at least one or more of vegetable oil, animal fat and/or microbial oil. This kind of paraffinic hydrocarbon feeds tend to have relatively narrow carbon number distribution and therefor benefit more from being subjected to the present process, compared e.g. to FT-based feeds usually having substantially Gaussian distribution of hydrocarbon chains and a wide carbon chain length distribution. Typically providing the paraffinic hydrocarbon feed comprises subjecting an oxygenated hydrocarbon feed to hydrodeoxygenation in the presence of a hydrodeoxygenation catalyst to obtain a hydrodeoxygenation effluent, and then subjecting the hydrodeoxygenation effluent to gas-liquid separation, and optional paraffinic feed fractionation to obtain as the paraffinic hydrocarbon feed the degassed hydrodeoxygenation effluent or a fraction thereof. Hydrodeoxygenation may be conducted as described in prior art publications, such as FI100248B, EP1741768A1, EP2155838B1 or FI129220 B1.

Generally, in the context of the present disclosure, hydroisomerisation (HI) of the paraffinic hydrocarbon feed in the first reaction section/reactor is operated so that isomerisation reactions prevail while cracking reactions are controlled or suppressed. Typically the HI in the first reaction section/reactor is conducted at a temperature within a range from 200 °C to 500 °C, preferably from 230 °C to 500 °C, more preferably from 250 °C to 450 °C, even more preferably from 280 °C to 400 °C, a pressure within a range from 1 MPa to 10 MPa, preferably from 2 MPa to 8 MPa or from 3 MPa to 10 MPa, a $H_2$ partial pressure at the inlet of the first reaction section/reactor within a range from 1 MPa to 10 MPa, preferably from 2 MPa to 8 MPa, a weight hourly space velocity within a range from 0.1 to 10, preferably from 0.2 to 8, more preferably from 0.4 to 6 kg paraffinic hydrocarbon feed per kg catalyst per hour, and a $H_2$ to paraffinic hydrocarbon feed ratio within a range from 10 to 2000, preferably from 50 to 1000 normal liters $H_2$ per liter paraffinic hydrocarbon feed. Hydroisomerisation may be conducted as described in prior art publications, such as FI100248B, EP1741768A1, EP2155838B1 or FI129220 B1. Severity of the HI may be increased by at least one or more of: decreasing WHSV, increasing temperature, and/or increasing pressure. When using fresh HI catalyst, high severity HI conditions may be reached at lower temperature and/or pressure, and/or using higher WHSV, and towards the end of the HI catalyst lifetime higher temperature and/or pressure, and/or lower WHSV may be needed to reach even medium severity HI. In the present context, HI that yields liquid effluents having, as wt-% of paraffins in the liquid effluent, total i-paraffins content 50-85 wt-% and multiple-branched i-paraffins content at most 25 wt-%, or total i-paraffins content 85-95 wt-% and multiple-branched i-paraffins content 25-55 wt-%, or total i-paraffins content at least 95 wt-% and multiple-branched i-paraffins content more than 55 wt-%, is generally regarded as HI of low severity or medium severity or high severity, respectively, although these content ranges are merely for illustrating the order of magnitude, and may overlap to some extent, and vary from case to case.

Generally, hydrocracking in the second reaction section/reactor is operated so that cracking reactions, especially those enhancing degree of effective cracking, particularly to C8-C14 hydrocarbons but also to lighter non-gaseous hydrocarbons, are more abundant than in the hydroisomerisation in the first reaction section/reactor. Preferably cracking reactions, especially those enhancing the degree of effective cracking, prevail in the hydrocracking in the second reaction section/reactor, yet generally without excessive cracking and excessive fuel gas formation. Typically the hydrocracking in the second reaction section/reactor is conducted at a temperature within a range from 200 °C to 450 °C, preferably from 220 °C to 430 °C, more preferably from 280 °C to 350 °C, a pressure within a range from 0.4 MPa to 8 MPa, preferably from 1 MPa to 7 MPa, a $H_2$ partial pressure at the inlet of the second reaction section/reactor within a range from 0.4 MPa to 8 MPa, preferably from 1 MPa to 7 MPa, a weight hourly space velocity within a range from 0.1 to 10, preferably from 0.2 to 8, more preferably from 0.4 to 6, even more preferably from 0.5 to 1.5 kg second reactor feed per kg catalyst per hour, and a $H_2$ to second reactor feed ratio within a range from 10 to 2000, preferably from 50 to 1000 normal liters $H_2$ per liter second reactor feed.

Preferably, the hydroisomerisation catalyst is a non-sulphided bifunctional hydroisomerisation catalyst and the hydrocracking catalyst is a non-sulphided bifunctional hydrocracking catalyst, preferably said non-sulphided bifunctional catalysts comprising at least one or more metal(s) selected from noble metals of Group VIII, more preferably at least one or more metal(s) selected from Pt and/or Pd, and at least one or more acidic porous material(s). Non-sulphided bifunctional catalysts are preferred because they do not require sulphidation during operation for maintaining their activity, and hence the sulphur content of various process streams and products may be kept low and less efficient $H_2S$ separation and

recovery is needed. Especially non-sulphided bifunctional catalysts comprising noble-metals may be active at lower temperatures and show higher selectivity for isomerisation reactions, compared to sulphided catalysts, but are sensitive to deactivation by $H_2S$. Particularly for the hydrocracking reactions in the second reaction section/reactor, bifunctional HC catalysts are beneficial because they have in addition to cracking activity also at least some isomerisation activity, and may be particularly efficient in effective cracking. As further advantage, bifunctional hydrocracking catalysts comprising at least one or more metals selected from Group VIII noble metals, preferably Pt and/or Pd, have been found to provide at relatively low temperatures a high activity compared to HC catalysts comprising non-noble metals, and thus better control of thermal cracking. At low temperatures, the thermodynamic equilibrium tends to shift towards dearomatisation, thus reducing aromatics formation by side reactions. Providing the second reaction section/reactor with a bifunctional HC catalyst may also achieve an isoparaffin content (wt-% isoparaffins of the total weight paraffins) in the hydrocracking effluent that is not necessarily significantly lower than in the hydroisomerisation effluent, or may be the same or even higher.

According to certain preferred embodiments, the present gasoline fuel component is obtainable by a process comprising subjecting an oxygenated hydrocarbon feed comprising at least one or more of vegetable oil, animal fat and/or microbial oil to hydrodeoxygenation, followed by gas-liquid separation, to provide a paraffinic hydrocarbon feed comprising at least 60 wt-% paraffins of the total weight of the paraffinic hydrocarbon feed, of which paraffins at most 30 wt-% are i-paraffins;

> subjecting the paraffinic hydrocarbon feed in a first reaction section, preferably in a first reactor, to hydroisomerisation in the presence of a hydroisomerisation catalyst to obtain a hydroisomerisation effluent;
> subjecting a second reaction section feed comprising at least a portion of the hydroisomerisation effluent optionally comprising a recycle stream, to hydrocracking in a second reaction section, preferably in a second reactor, in the presence of a hydrocracking catalyst to obtain a hydrocracking effluent;
> subjecting the hydrocracking effluent to fractionation and recovering from the fractionation at least the gasoline fuel component, and optionally an aviation fuel component and/or the recycle stream preferably having a T5 temperature (5 vol-% recovered, EN ISO 3405-2019) of 270 °C or higher.

The prevailing component in the paraffinic hydrocarbon feed is n-paraffins. However, the presence of a certain amount of i-paraffins in the paraffinic hydrocarbon feed may still be beneficial. Compared to otherwise similar feeds but without i-paraffin content, paraffinic hydrocarbon feeds containing a certain amount of i-paraffins may achieve a hydroisomerisation effluent with a higher content of multiple-branched i-paraffins.

Preferably, the paraffinic hydrocarbon feed of the present disclosure comprises at least 70 wt-%, preferably at least 80 wt-%, more preferably at least 90 wt-% hydrocarbons having a carbon number within a range from C12 to C30, even more preferably within a range from C14 to C22, of the total weight of the paraffinic hydrocarbon feed. These feeds allow good yields of two or more fuel components of different kinds, and are readily available for example from conventional hydrodeoxygenation processes of vegetable oils, animal fats, and/or microbial oils, comprising fatty acids. Paraffinic feeds on the heavier side are obtainable e.g. from HDO of oil from energy crops such as Brassica species, algal oils, crude tall oil (CTO), tall oil fatty acids (TOFA), and/or tall oil pitch (TOP).

Presence of multiple-branched i-paraffins in the hydroisomerisation effluent may be considered beneficial as it may contribute beneficially to the degree of effective cracking in the hydrocracking step. When a desired degree of effective cracking, particularly to C8-C14 hydrocarbons but also to lighter non-gaseous hydrocarbons, is achieved in the hydrocracking step at milder operating conditions, excessive cracking may be avoided, and formation of gaseous hydrocarbons reduced. Also, an increased content of multiple-branched i-paraffins in the hydroisomerisation effluent may be considered beneficial in that it may provide improved RON to the gasoline fuel component, and improved cold properties to the optionally recovered at least one or more further fuel component(s) such as aviation fuel component and/or diesel fuel component. Without being bound to any theory, it is believed that a multiple-branched i-paraffin is more likely to form two branched paraffin molecules upon cracking in the hydrocracking step instead of one branched and one n-paraffin, hence increasing the i-paraffin content of the hydrocracking effluent relative to n-paraffin content. The same can be seen also downstream in the products recovered from fractionation and in an optionally recovered recycle stream.

According to certain embodiments, the first reaction section for hydroisomerisation and the second reaction section for hydrocracking may be situated in one and the same reactor, e.g in separate catalyst beds with appropriate equipment thereto. According to certain other embodiments, the first reaction section for hydroisomerisation is in a first reactor and the second reaction section for hydrocracking is in a second reactor. Having the hydroisomerisation section in a first reactor and the hydrocracking section in a second reactor provides advantages i.e. in process design, process controls, and maintenance.

Preferably, the at least a portion of the hydroisomerisation effluent subjected to hydrocracking comprises at least 50 wt-%, further preferably at least 60 wt-%, more preferably at least 70 wt-%, even more preferably at least 80 wt-% isoparaffins of the total amount of paraffins in the at least a portion of the hydroisomerisation effluent, and optionally multiple-branched isoparaffins at least 5 wt-%, preferably at least 10 wt-%, more preferably at least 15 wt-%, even more preferably at least 20 wt-%, and typically at most 70 wt-%, of the total amount of paraffins in the at least a portion of the hydroisomerisation effluent. Typically, the at least a portion of the hydroisomerisation effluent has a cloud point less than 0°C, preferably less than -5°C, more preferably less than -8°C, even more preferably less than -10°C, or less than -15°C (ASTM D 5771-17).

Hydrocracking of at least a portion of the hydroisomerisation effluent increases the yield of non-gaseous cracking products, particularly C8-C14 but also lighter non-gaseous hydrocarbons, contributing to yield of the gasoline fuel component. As the feed to the hydrocracking may contain elevated i-paraffins content, and elevated multiple-branched i-paraffins content, the present inventors have found that with the hydrocracking it is possible to yield further i-paraffins instead of decreasing their amount, without excessive cracking to less valuable light C1-C3 hydrocarbons.

The advantageous hydrocarbon composition of the present gasoline fuel component, specifically in relation to carbon number distribution and content of i-paraffins and n-paraffins, is demonstrated also in end use as beneficial combustion in engines. When studied in laboratory conditions, characteristics correlating with properties desired for fuels are e.g. the shape of the distillation curve and distillation characteristics. The T10 and T90 temperatures and difference there between reported in the Examples immediately reveal to a skilled reader gasoline's suitability to spark-ignition engines and predicted performance therein. Hence, according to certain embodiments, here is provided a gasoline fuel component, wherein the difference between T90 temperature (90 vol-% recovered, ASTM D7096-19) and T10 temperature (10 vol-% recovered, ASTM D7096-19) is at least 60 °C, more preferably at least 70 °C, even more preferably at least 80°C or at least 100°C, for example within a range from 60 to 140 °C. Preferably, the gasoline fuel component has a T90 temperature (90 vol-% recovered, ASTM D7096-19) within a range from 95 to 150°C, preferably within a range from 95 to 140°C, more preferably within a range from 95 to 130°C, so as to positively contribute to the octane rating of the gasoline fuel component, and to allow recovery of an aviation fuel component in high yield from the same production process.

Conducting fractionation so that C8 i-paraffins are recovered in the gasoline fuel component and C8 n-paraffins having higher boiling point are recovered mostly in an aviation fuel component may contribute to and/or further increase the high weight ratio of C8 i-paraffins to C8 n-paraffins of the present gasoline fuel component. By carefully selecting cut-point in the fractionation recovery of C8 n-paraffins in the gasoline fuel component may be reduced, still without reducing yield of the gasoline component much. This way, gasoline fuel components with even very high weight ratio of C8 i-paraffins to C8 n-paraffins are obtainable without a need to increase the degree of branching excessively or up to the hilt.Other characteristics followed for gasoline components are related to volatility, vapor pressure and flash point. Typical measures reflecting said characteristics include E70 and E150 values. For a gasoline composition, the E70 value defines the percentage (vol-%) evaporated at 70 °C at standard atmospheric pressure. A standardized method for determining E70, as well as E100 and E150 values, for a gasoline composition is defined in EN ISO 3405:2011. Due to the carbon number distribution and content of i-paraffins and n-paraffins in the present gasoline fuel component, blending is not limited by the vapor pressure.

According to a further aspect, the gasoline fuel component may be used in a gasoline fuel composition. The higher i-paraffin content and enhanced i-paraffin profile contribute to improved RON, which allows the present gasoline fuel component to be incorporated in higher amounts in gasoline fuels, compared to e.g. biomass-derived transportation fuel suitable for use in spark-ignition engines currently commercially available, such currently commercially available fuel having a lower RON. Compared to aromatics-containing blend components the present gasoline fuel component causes less emissions. Additionally, the present gasoline fuel component may help to increase the bio-content of the gasoline fuel composition. Futhermore, each of increased i-paraffin content, increased weight ratio of i-paraffins to n-paraffins, and increased weight ratio of multiple-branched i-paraffins to n-paraffins may help to lower the viscosity of the gasoline fuel component, thereby improving mixing and blendability with further components to be included in the gasoline fuel composition.

Compared to ethanol, which is currently the prevailing bio-component blended to gasoline compositions, the present gasoline component is less hygroscopic. Further, in distillation of gasoline blends, ethanol as a blending component causes a turn to a steeper slope at about 70 °C and hence produces a notable angle to the distillation curve leading to challenges in meeting the requirements for gasoline compositions e.g. as specified in EN228:2012 amended 2017, whereas the present gasoline fuel component in blends may provide almost linear distillation curve. Contrary to ethanol and other oxygenates, there are no regulatory blending restrictions for paraffinic blend components, like the present gasoline fuel component. Therefore, the present gasoline fuel component is a highly desired alternative blending component for gasoline fuels, and foreseen beneficial both for the production and the end user of the gasoline fuel compositions.

Beneficial vapor pressure characteristics of the present gasoline fuel component enable the use of less expensive and light blend components, such as butane in a gasoline fuel composition, which would not be an option if another component having higher vapor pressure, such as ethanol, was used as the bio-component.

When used in a gasoline fuel composition, the present gasoline fuel component may be blended with at least one or more further component(s). These may originate for example from various sources and/or hydrocarbon refining processes, typically recovered therefrom by distillation. Examples of such processes comprise FCC, reformation, alkylation, pyrolysis, steam cracking, hydrodeoxygenation, hydrodesulphurisation, isomerisation, or combinations thereof. Hence, in addition to the present gasoline fuel component, the gasoline fuel composition may comprise at least one or more of alcohols, ethers and/or hydrocarbon cut(s), preferably at least one or more of methanol, ethanol, propanol, i-propanol, butanol, i-butanol, tert-butanol, pentanol, i-pentanol, MTBE, ETBE, DIPE, TAME, TAEE, butane, alkylate gasoline, isomerate, raffinate, FCC gasoline, reformate, pygas and/or light straight-run (LSR) gasoline. Especially good gasoline fuel compositions, regarding high octane rating and biogenic carbon content, are obtainable when maximum amount of biogenic oxygenated gasoline fuel component(s), preferably biogenic ethanol, as allowed by the required maximum oxygen content, and maximum amount of the renewable gasoline fuel component as allowed by the required minimum octane rating, are blended with fossil hydrocarbon cut(s). The gasoline fuel composition may further comprise at least one or more additive(s), preferably at least one or more of antioxidant(s), stabilizer(s), detergent(s), corrosion inhibitor(s), friction modifier(s), metal deactivator(s), and/or fuel dye(s). Blends containing more than two further components are typical. Exemplary gasoline fuel compositions may comprise the present gasoline fuel component, ethanol, alkylate gasoline, antioxidant(s) and stabiliser(s); or the present gasoline fuel component, ethanol, LSR gasoline, antioxidant(s), stabiliser(s), and detergent(s); or the present gasoline fuel component, MTBE, pygas, FCC gasoline, antioxidant(s), stabiliser(s), friction modifier(s), and detergent(s), just to name a few exemplary gasoline fuel compositions.

According to certain embodiments, blending the gasoline fuel component provides a gasoline fuel composition fulfilling the requirements for gasoline fuels set in Directive 2009/30/EC, and optionally in EN228:2012 amended 2017.

According to certain embodiments, said gasoline fuel composition comprises the present gasoline fuel component in an amount from 1 to 25 vol-%, preferably from 1 to 20 vol-% of the total gasoline fuel composition volume. When the present gasoline fuel component has a high bio-content, the gasoline fuel component alone provides significant bio-content to the gasoline fuel composition. The bio-content may be further enhanced when the gasoline fuel composition comprises the present gasoline fuel component in an amount from 1 vol-% to 25 vol-%, preferably from 1 vol-% to 20 vol-% of the total gasoline fuel composition volume and up to 20 vol-% or up to 10 vol-% of ethanol, preferably bioethanol, of the total gasoline fuel composition volume. For such gasoline fuel compositions, even as high as 45 vol-% of the components may then be renewable providing a biogenic carbon content (EN 16640 (2017)) of more than 40 wt-% based on the total weight of carbon (TC) in the gasoline fuel component. A particularly promising gasoline fuel composition comprises the present gasoline fuel component in an amount of about 10 vol-% and about 10 vol-% bioethanol of the total gasoline fuel composition volume.

In addition to the usability in gasoline fuel compositions, the present gasoline fuel component is suitable for a wide range of various other uses, such as in feedstock(s) for industrial conversion process(es), preferably in thermal cracking feedstock(s) and/or in catalytic cracking feedstock(s), in solvent(s), in carrier(s), in dispersant composition(s), in demulsifier(s), in extractant(s), in detergent(s), in degreasing composition(s), in cleaner(s), in thinner(s), in penetrating oil(s), in anticorrosion composition(s), in multipurpose oil(s), in metal working, in agriculture, in construction, in electronics, in medical appliance(s), in composition(s) for car, electrical, textile, packaging, paper and/or pharmaceutical industry, and/or in manufacture of intermediate(s) therefor. The elevated isoparaffin to n-paraffin ratio of the present gasoline fuel compositions may lower viscosity, and improve pumping and mixing characteristics, and blendability, that are generally desired and beneficial properties for a wide range of uses, and particularly for uses involving spraying, injecting and/or admixing with other ingredients. Due to generally meeting the most important specifications for light naphtha and/or gasoline, that are commonly used as high-volume industrial feedstocks, the present gasoline fuel compositions can be used in the same applications without requiring changes to the existing equipment or facilities. Use of the present gasoline fuel components is particularly preferred in thermal cracking feedstock(s) and/or in catalytic cracking feedstock(s), for producing olefinic monomers, particularly ethylene, and/or propylene, as the very low cyclics' content helps to reduce formation of coke-forming aromatics, very high paraffin content helps to improve conversion to light olefins, even at less severe cracking conditions, and the high i-paraffin content is foreseen to favor generation of favorable propylene to ethylene product ratios in these processes.

**Schematical presentation of the process**

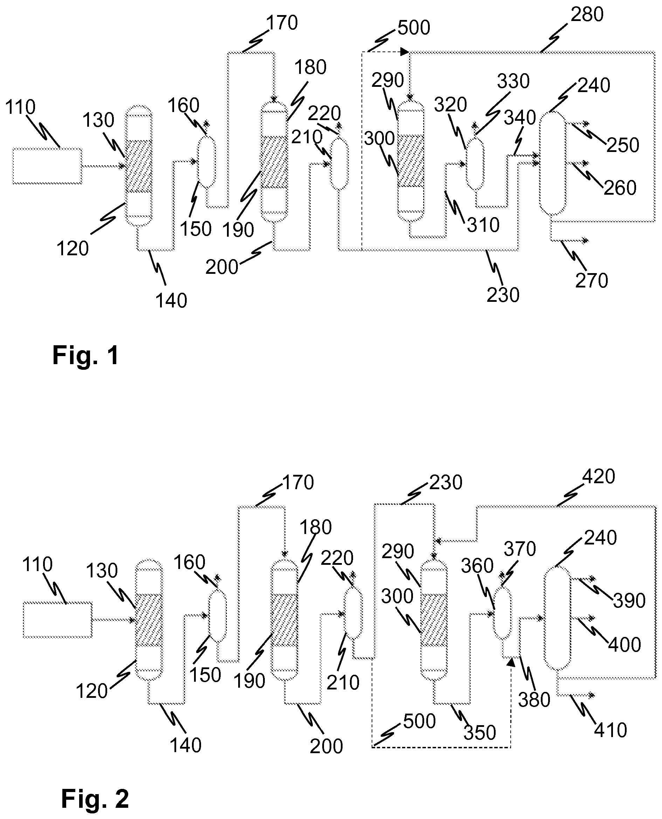

Fig. 1 schematically shows a process according to an example for producing the present gasoline fuel component. In Fig. 1, oxygenated hydrocarbon feed 110 is fed to a HDO reactor 120 in which it is subjected to hydrodeoxygenation in the presence of a HDO catalyst 130 to obtain a hydrodeoxygenation effluent (HDO effluent) 140. The obtained HDO effluent 140 is subjected to gas-liquid separation 150 to separate from the HDO effluent at least compounds that are gaseous at NTP 160 to obtain a degassed HDO effluent 170, which is in this example the paraffinic hydrocarbon feed as herein defined. The degassed HDO effluent 170 is in Fig. 1 then fed to a first reactor 180 in which the degassed HDO effluent 170 is subjected to hydroisomerisation in the presence of a hydroisomerisation catalyst 190 to obtain a hydroisomerisation effluent (HI effluent) 200, and the obtained HI effluent 200 is subjected to gas-liquid separation 210 to separate from the HI effluent 200 at least compounds that are gaseous at NTP 220 to obtain a degassed HI effluent 230. In Fig. 1, the degassed HI effluent 230 is fed to a distillation unit 240, that may comprise a single column, or prefractionation and main distillation columns, from which several streams or cuts are obtained. From the distillation in Fig. 1, a gasoline fuel component 250 and an aviation fuel component 260 and/or a diesel fuel component 270 are recovered. Further, a recycle stream 280 having a T5 boiling point of 270 °C or higher is separated in Fig. 1. A second reaction section feed comprising the recycle stream 280 as the at least a portion of the HI effluent is in Fig. 1 fed to a second reactor 290 in which it is subjected to hydrocracking in the presence of a hydrocracking catalyst 300 to obtain a recycle effluent (hydrocracking effluent) 310. In Fig. 1, the recycle effluent 310 is subjected to gas-liquid separation 320 to separate from the recycle effluent 310 at least compounds that are gaseous at NTP 330 to obtain a degassed recycle effluent 340. The degassed recycle effluent 340 is then in Fig. 1 fed as a co-feed with the degassed HI effluent 230 to the distillation unit 240 for fractionation. In certain examples yet another portion of the HI effluent 200 or 230 may be fed as a co-feed 500 with the recycle stream 280, i.e. as part of the second reaction section feed, to hydrocracking in the second reactor 290.

Fig. 2 schematically shows a process according to another example for producing the present gasoline fuel component. In Fig. 2, oxygenated hydrocarbon feed 110 is fed to a HDO reactor 120 in which it is subjected to hydrodeoxygenation in the presence of a HDO catalyst 130 to obtain a hydrodeoxygenation effluent (HDO effluent) 140. The obtained HDO effluent 140 is subjected to gas-liquid separation 150 to separate from the HDO effluent at least compounds that are gaseous at NTP 160 to obtain a degassed HDO effluent 170, which is in this example the paraffinic hydrocarbon feed as herein defined. The degassed HDO effluent 170 is in Fig. 2 then fed to a first reactor 180 in which the degassed HDO effluent 170 is subjected to hydroisomerisation in the presence of a hydroisomerisation catalyst 190 to obtain a hydroisomerisation effluent (HI effluent) 200. The obtained HI effluent 200 is in Fig. 2 subjected to gas-liquid separation 210 to separate from the HI effluent 200 at least compounds that are gaseous at NTP 220 to obtain a degassed HI effluent 230. In Fig. 2, the degassed HI effluent 230 is fed to a second reactor 290 in which it is subjected to hydrocracking in the presence of a hydrocracking catalyst 300 to obtain a hydrocracking effluent 350. The hydrocracking effluent 350 is in Fig. 2 subjected to gas-liquid separation 360 to separate from the hydrocracking effluent 350 at least compounds that are gaseous at NTP 370 to obtain a degassed hydrocracking effluent 380. In Fig. 2, a second reaction section feed comprising the degassed hydrocracking effluent 380 is fed to a distillation unit 240, that may comprise a single column, or prefractionation and main distillation columns, from which several streams or cuts may be obtained. From the distillation in Fig. 2, a gasoline fuel component 390, and an aviation fuel component 400 and/or a diesel fuel component 410 are recovered. Further, a recycle stream 420, preferably having a T5 boiling point of 270 °C or higher may be separated. In Fig. 2, the recycle stream 420 may be fed to the second reactor 290 to hydrocracking as a co-feed with the at least a portion of the degassed HI effluent 230, i.e. as part of the second reaction section feed. In certain examples yet another portion of the HI effluent 200 or 230 may be fed as a co-feed 500 with the hydrocracking effluent 350 or 380 to the fractionation.

**EXAMPLES**

**Example 1** - **Production of present gasoline fuel components**

The gasoline fuel components studied herein were recovered from test runs, where three different hydrocracking (HC) feeds (feed A, B, and C) were obtained by subjecting two different types of fatty feedstocks to hydrodeoxygenation (HDO) and gas-liquid separation to obtain paraffinic hydrocarbon feed comprising >95 wt-% paraffins of the total weight of the paraffinic hydrocarbon feed, said paraffinic hydrocarbon feed further subjected to hydroisomerisation (HI) of different severity. A fraction of the hydroisomerisation effluent obtained by degassing the hydroisomerisation effluent, or by recovery of just a bottom fraction of the hydroisomerisation effluent, was hydrocracked, followed by degassing the effluent from hydrocracking. A renewable aviation fuel component was recovered from the thus obtained hydrocracking effluent as the main product, and at least a gasoline fuel component as a further product of particular interest here. For one of the hydrocracking effluents (test run 8), a second fractionation was conducted in an optimised way so as to increase the aviation fuel component yield (test run 8 with optimised fractionation, TR8o). Details of the hydrocracking feeds are given in Table 1, and Table 2 shows process details for the hydrocracking as well as approximate boiling point ranges and yields of the gasoline fuel components.

Table 1. Details of the hydrocracking feeds.

| | HC Feed B | HC Feed A | HC Feed C |
|---|---|---|---|
| | Animal fat/ vegetable oil base subjected to HDO, high severity HI, degassing and recovery of bottom fraction as HC feed | Animal fat/ vegetable oil base subjected to HDO, low severity HI, degassing and recovery of bottom fraction as HC feed | Heavy vegetable oil/ animal fat base subjected to HDO, medium severity HI and degassing |
| Cloud point, °C (ASTM D 5771-17) | -30 | -11 | -27 |
| Density at -15°C, kg/m$^3$ (EN ISO 12185-1996) | 788 | 786 | 779 |
| IBP to FBP, °C (ENISO3405) | 284 to 327 | 286 to 317 | 78 to 344 |
| T5; T10 to T90, °C (ENISO3405) | 292; 293 to 300 | 294; 295 to 301 | 208; 251 to 323 |
| Paraffins, wt-% (GCxGC-FID/ GCxGC-MS) | nP 3 wt-%; total iP 97wt-%; multi-iP 64wt-%; C15-C18 (each present): 94wt-% in total | nP 13 wt-%; total iP 87wt-%; multi-iP 23wt-%; C15-C18 (each present): 96wt-% in total | nP 5 wt-%; total iP 94wt-%; multi-iP 59wt-%; C15-C22 (each present): 88 wt-% in total |

In Table 1, nP denotes n-paraffins, iP i-paraffins, and multi-iP denotes multiple-branched i-paraffins.

Table 2. Process details for test run conditions in hydrocracking, cloud points of degassed hydrocracking effluents, approximate boiling point ranges and yields of the gasoline fuel components (G) (as wt-% of the degassed HC effluent).

| Test Run | HC Feed | HC conditions | Effluent's cloud point, °C | Yield of G, wt-% | Approx. G boiling point range | G sample code |
|---|---|---|---|---|---|---|
| 8 | B | 348 °C, 40 bar, WHSV 0.8 1/h, H$_2$ 300 nL/L | -79 | 24.7 | IBP to ca 150 °C | G1 |
| 15 | A | 348 °C, 40 bar, WHSV 0.8 1/h, H$_2$ 300 nL/L | -78 | 29.7 | IBP to ca 150 °C | G2 |
| 8o | B | 348 °C, 40 bar, WHSV 0.8 1/h, H$_2$ 300 nL/L | -79 | 11.4 | IBP to ca 100 °C | G3 |
| 3 | C | 345 °C, 40 bar, WHSV 1.3 1/h, H$_2$ 360 nL/L | -57 | 8.4 | IBP to ca 120 °C | G4 |
| 4 | C | 345 °C, 40 bar, WHSV 0.6 1/h, H$_2$ 450 nL/L | -83 | 13.9 | IBP to ca 120 °C | G5 |
| 5 | C | 350 °C, 40 bar, WHSV 1.3 1/h, H$_2$ 225 nL/L | -57 | 13.7 | IBP to ca 150 °C | G6 |
| 6 | C | 350 °C, 40 bar, WHSV 0.6 1/h, H$_2$ 450 nL/L | < -95 | 25.5 | IBP to ca 150 °C | G7 |

The hydrocracking catalyst was a non-sulphided bifunctional hydrocracking catalyst comprising Pt on a zeolite/zeolite-type material in all test runs. When the feeds reported in Table 1 were subjected to the hydrocracking conditions reported in Table 2, said catalyst had not only cracking but also isomerizing activity.

Gasoline fuel components were generated in good yields, generally the yields being higher at higher hydrocracking temperature, at lower WHSV and/or with higher end points as expressed e.g. by T95 or FBP.

**Example 2** - **Chemical composition and distillation characteristics of present gasoline fuel components**

Gasoline fuel components G1-G7 recovered in Example 1 were evaluated based on hydrocarbon composition (Tables 3 and 4) and distillation characteristics (Table 5). Comparison was made to a conventional paraffinic gasoline component (reference gasoline, RG), obtained by subjecting a fatty feedstock to HDO, HI of medium severity, degassing and fractionation, i.e. without subjecting to hydrocracking. Hydrocarbon composition analysis was conducted with a detailed hydrocarbon analysis, comprising individual component identification (as to hydrocarbon groups [i-paraffins, n-paraffins, naphthenes, aromatics, olefins] and carbon numbers [C#]). Examples of the volumetric shares as analysed are given in Tables 3 and 4. The methods used were in-house methods adapted from standard methods ASTMD6729 and ENISO22854.

In addition to volumetric shares of i- and n-paraffins and multiple-branched i-paraffins, further characteristics were calculated such as i- to n-paraffin ratio and average carbon numbers for C4-C9 i- and n-paraffins (Tables 3 and 4). The average carbon numbers $C_{avg}$ for C4-C9 range i- and n-paraffins were calculated multiplying the volumetric share for each carbon number C# vol, further making a distinction based on hydrocarbon groups (i-paraffin, n-paraffin). From these, the average carbon numbers for C4-C9 range i- and n-paraffins were calculated using the following equation.

$$
\begin{aligned}
(i \text{ or } n)&P(C4-C9)avgC\# \\
&= 4 * \frac{(i \text{ or } n)PC4\ vol}{(i \text{ or } n)P(C4-C9)vol} + 5 * \frac{(i \text{ or } n)PC5\ vol}{(i \text{ or } n)P(C4-C9)vol} + 6 \\
&* \frac{(i \text{ or } n)PC6\ vol}{(i \text{ or } n)P(C4-C9)vol} + 7 * \frac{(i \text{ or } n)PC7\ vol}{(i \text{ or } n)P(C4-C9)vol} + 8 * \frac{(i \text{ or } n)PC8\ vol}{(i \text{ or } n)P(C4-C9)vol} + 9 \\
&* \frac{(i \text{ or } n)PC9\ vol}{(i \text{ or } n)P(C4-C9)vol}
\end{aligned}
$$

As an example of said calculations, the average carbon number 5.8 for C4-C9 n-paraffins and 7.0 for C4-C9 i-paraffins in sample G7 were calculated as follows:

$$
\begin{aligned}
n - paraf\ avgC\# =\ &3 * \frac{0.86}{26.45} + 4 * \frac{5.17}{26.45} + 5 * \frac{6.21}{26.45} + 6 * \frac{6.16}{26.45} + 7 * \frac{4.91}{26.45} + 8 * \frac{2.94}{26.45} + 9 * \frac{0.2}{26.45} \\
&= 5.8
\end{aligned}
$$

$$
i - paraf\ avgC\# =\ 4 * \frac{2.67}{71.13} + 5 * \frac{8.10}{71.13} + 6 * \frac{13.56}{71.13} + 7 * \frac{18.31}{71.13} + 8 * \frac{19.55}{71.13} + 9 * \frac{8.73}{71.13} = 7.0
$$

Average carbon numbers for other samples were calculated accordingly.

Table 3. Compositional characteristics of test run gasoline fuel components G1-G3 (derived from HC feed A or B), and paraffinic reference gasoline component RG as determined by GC-FID/GC-MS.

| Sam ple | G1 (vol-%) IBP to ca.150°C | | | G2 (vol-%) IBP to ca. 150°C | | | G3 (vol-%) IBP to ca.100°C | | | RG (vol-%) ca. 47 to ca.170°C | | |
|---|---|---|---|---|---|---|---|---|---|---|---|---|
| C# | iP | nP | NOA | iP | nP | NOA | iP | nP | NO A | iP | nP | NOA |
| 3 | 0.0 | 1.32 | | | 2.49 | | | | | | | |
| 4 | 3.39 | 6.33 | | 4.57 | 8.11 | | 0.37 | 1.48 | | | 0.01 | |
| 5 | 7.85 | 5.83 | | 9.29 | 6.42 | | 7.53 | 7.21 | | 4.03 | 11.02 | 0.6 |
| 6 | 12.03 | 5.48 | 0.2 | 13.48 | 5.81 | 0.1 | 21.90 | 10.42 | 0.3 | 13.68 | 14.45 | 2.3 |
| 7 | 15.37 | 4.30 | 0.2 | 16.79 | 4.45 | 0.2 | 28.68 | 7.23 | 0.7 | 16.44 | 10.64 | 2.2 |
| 8 | 16.46 | 2.99 | 0.2 | 17.45 | 2.78 | 2.5 | 11.67 | 0.64 | 0.5 | 11.15 | 3.96 | 1.0 |
| 9 | 12.28 | 1.02 | 0.0 | 4.24 | | | 0.34 | | | 3.85 | 0.98 | 0.3 |
| 10 | 2.64 | | | | | | | | | 1.65 | 0.29 | 0.1 |
| 11 | | | | | | | | | | 0.68 | 0.08 | 0.0 |
| 12 | | | | | | | | | | 0.25 | 0.02 | |

(continued)

| Sample | G1 (vol-%) IBP to ca.150°C | | | G2 (vol-%) IBP to ca. 150°C | | | G3 (vol-%) IBP to ca.100°C | | | RG (vol-%) ca. 47 to ca.170°C | | |
|---|---|---|---|---|---|---|---|---|---|---|---|---|
| C# | iP | nP | NOA | iP | nP | NOA | iP | nP | NOA | iP | nP | NOA |
| 13 | | | | | | | | | | 0.13 | 0.01 | |
| 14 | | | | | | | | | | 0.05 | | |
| 15 | | | | | | | | | | 0.02 | | |
| Tot. | 70.0 | 27.3 | 0.6 | 65.8 | 30.1 | 2.9 | 70.5 | 27.0 | 1.5 | 51.9 | 41.5 | 6.5 |
| Avg. C# C4-9 | 7.0 | 5.8 | | 6.7 | 5.5 | | 6.6 | 5.9 | | 6.9 | 6.3 | |
| iC8/ nC8 | 5.5 | | | 6.3 | | | 18.2 | | | 2.8 | | |
| iC6-8/n C6-8 | 3.4 | | | 3.7 | | | 3.4 | | | 1.4 | | |
| C4-9 iP | 67.4 | | | 65.8 | | | 70.5 | | | 49.2 | | |
| C6-9 m-iP | 11.8 | | | n.a. | | | n.a. | | | 4.5 | | |
| n.a. = not analysed | | | | | | | | | | | | |

In Table 3, NOA column denotes sum amounts of naphthenes, olefins and aromatics, C# denotes carbon number, C6-9 m-iP indicates amount of multiple-branched i-paraffins in the C6-C9 range, average C# C4-9 denotes calculated average carbon number for the C4-C9 range n-paraffins and i-paraffins.

Table 4. Compositional characteristics of test run gasoline fuel components G4-G7 (derived from HC feed C) as determined by GC-FID/GC-MS.

| Sample | G4 (vol-%) IBP to ca.120°C | | | G5 (vol-%) IBP to ca.120°C | | | G6 (vol-%) IBP to ca.150°C | | | G7 (vol-%) IBP to ca.150°C | | |
|---|---|---|---|---|---|---|---|---|---|---|---|---|
| C# | iP | nP | NOA | iP | nP | NOA | iP | nP | NOA | iP | nP | NOA |
| 3 | | 1.20 | | | 0.47 | | | 1.13 | | | 0.86 | |
| 4 | 3.88 | 7.83 | | 2.74 | 5.89 | | 3.11 | 5.85 | | 2.67 | 5.17 | |
| 5 | 11.00 | 10.23 | 0.0 | 9.18 | 7.60 | 0.0 | 8.29 | 6.58 | 0.0 | 8.10 | 6.21 | 0.0 |
| 6 | 18.00 | 10.19 | 0.3 | 15.52 | 7.60 | 0.3 | 13.23 | 6.48 | 0.2 | 13.56 | 6.16 | 0.2 |
| 7 | 20.80 | 6.02 | 0.6 | 21.16 | 5.89 | 0.7 | 18.21 | 5.23 | 0.6 | 18.31 | 4.91 | 0.7 |
| 8 | 7.61 | 0.37 | 1.2 | 18.25 | 1.73 | 1.6 | 18.97 | 3.14 | 1.0 | 19.55 | 2.94 | 1.2 |
| 9 | 0.57 | 0.04 | 0.0 | 1.04 | 0.05 | 0.0 | 7.39 | 0.12 | 0.2 | 8.73 | 0.20 | 0.3 |
| 10 | 0.11 | 0.01 | 0.0 | 0.19 | 0.01 | 0.0 | 0.19 | 0.01 | 0.0 | 0.17 | | |
| 11 | 0.02 | | 0.0 | 0.03 | | | 0.03 | | | 0.03 | | |
| 12 | | | | | | | | | | 0.01 | | |
| Tot. | 62.0 | 35.9 | 2.1 | 68.1 | 29.2 | 2.6 | 69.4 | 28.5 | 2.0 | 71.1 | 26.4 | 2.4 |
| Avg. C# C4-9 | 6.3 | 5.5 | | 6.7 | 5.7 | | 6.9 | 5.8 | | 7.0 | 5.8 | |
| iC8/ nC8 | 20.6 | | | 10.6 | | | 6.0 | | | 6.7 | | |
| iC6-8/n C6-8 | 2.8 | | | 3.6 | | | 3.4 | | | 3.7 | | |

(continued)

| Sample | G4 (vol-%) IBP to ca.120°C | | | G5 (vol-%) IBP to ca.120°C | | | G6 (vol-%) IBP to ca.150°C | | | G7 (vol-%) IBP to ca.150°C | | |
|---|---|---|---|---|---|---|---|---|---|---|---|---|
| C# | iP | nP | NOA | iP | nP | NOA | iP | nP | NOA | iP | nP | NOA |
| C4-9 iP | 61.9 | | | 67.9 | | | 69.2 | | | 70.9 | | |
| C6-9 m-iP | 6.3 | | | n.a. | | | 12.1 | | | n.a. | | |

In Table 4, NOA column denotes sum amounts of naphthenes, olefins and aromatics, C# denotes carbon number, C6-9 m-iP indicates amount of multiple-branched i-paraffins in the C6-C9 range, average C# C4-9 denotes calculated average carbon number for the C4-C9 range n-paraffins and isoparaffins.

Table 5. Distillation characteristics of gasoline fuel components G1-G7 (given as temperatures, °C, at which specified vol-% recovered, according to ASTM D7096-19), as well as boiling ranges as FBP minus IBP, and T90 minus T10.

| vol-% recovered | G1 | G2 | G3 | G4 | G5 | G6 | G7 |
|---|---|---|---|---|---|---|---|
| IBP | -42.2 | -43.5 | -0.9 | -42.8 | -42.1 | -42.7 | -42.7 |
| T5 | -0.8 | -42.4 | 27.6 | -11.6 | -1.7 | -1.8 | -1.7 |
| T10 | 27.3 | -12.7 | 28.3 | -0.7 | -1.0 | -0.9 | -0.7 |
| T20 | 36.1 | -1.1 | 59.7 | 27.6 | 27.4 | 27.8 | 28.2 |
| T30 | 63.8 | -0.4 | 60.3 | 35.9 | 36.1 | 59.7 | 59.8 |
| T40 | 80.1 | 27.2 | 64.4 | 59.8 | 60.0 | 64.1 | 64.1 |
| T50 | 92.0 | 35.8 | 69.3 | 63.9 | 64.2 | 80.3 | 80.2 |
| T60 | 98.1 | 59.6 | 90.0 | 68.8 | 78.0 | 91.9 | 91.8 |
| T70 | 113.3 | 68.4 | 92.2 | 89.7 | 90.5 | 98.0 | 98.0 |
| T80 | 125.9 | 89.8 | 92.7 | 92.1 | 94.4 | 112.8 | 112.8 |
| T90 | 138.1 | 104.7 | 104.8 | 98.1 | 112.5 | 125.5 | 125.7 |
| T95 | 146.4 | 115.6 | 113.4 | 112.4 | 115.9 | 132.8 | 133.0 |
| FBP | 177.4 | 137.7 | 137.8 | 137.9 | 137.9 | 139.9 | 140.0 |
| FBP-IBP: | 219.6 | 181.2 | 138.7 | 180.7 | 180.0 | 182.6 | 182.7 |
| T90-T10: | 110.8 | 117.4 | 76.5 | 98.8 | 113.5 | 126.5 | 126.3 |

From Tables 3 and 4, it can be seen that gasoline fuel components G1-G7 have significantly higher ratios of C8 i-paraffins to C8 n-paraffins, from almost double to sevenfold, compared to the paraffinic reference gasoline RG, while at the same time containing significant amount of C8 paraffins. Similarly, the gasoline fuel components G1-G7 have significantly higher ratios of C6-C8 i-paraffins to C6-C8 n-paraffins, at least double, compared to the paraffinic reference gasoline RG, while at the same time mainly containing C6-C8 paraffins. The gasoline fuel components G1-G7 have also moderate average carbon numbers for C4-C9 range i-paraffins, being above 6.0 units, and low average carbon numbers for C4-C9 range n-paraffins, being below 6.0 units, and at least 0.7 units smaller than the respective average carbon numbers for C4-C9 i-paraffins. The measured samples of the gasoline fuel components according to the present disclosure have high multiple-branched C6-C9 i-paraffin contents, >6.0 %, even >10 %, compared to <5.0 % of the reference gasoline RG, while at the same time mainly containing C4-C9 i-paraffins. Also, the amount of n-hexane is much lower in the gasoline fuel components according to the present disclosure compared to the reference gasoline RG. From Table 5, it can be seen how gasoline fuel compositions G1-G7 have relatively linear distillation behavior, which is beneficial for example for burning characteristics. The boiling ranges reported in Table 5 show that the gasoline fuel components do not represent narrow cuts, but that vast majority of the component volume boils over a fairly wide temperature range. The gasoline fuel components are thus recoverable with higher yields.

**Example 3 - Octane ratings of present gasoline fuel components**

The properties listed in Tables 3 and 4 are closely linked to octane rating of the gasoline fuel components. More specifically, higher degree of isomerisation, higher amount of i-paraffins and lower average carbon numbers in the C4-C9 range paraffins, were observed to result in higher octane ratings. Higher octane ratings are desired for use in gasoline fuel compositions for use as liquid transportation fuels.

Blend RON (ENISO5164-2014 corresponds to ASTMD2699-18) and blend MON (ENISO5163-2014 corresponds to ASTMD2700-19) were determined from the paraffinic reference gasoline component RG, and from three test run samples G3, G5, G7, produced under similar conditions, the main difference of said test run samples being the end cut points (about 100°C, 120 °C and 150 °C) (Table 6).

The gasoline fuel component quality was noted to be impacted at least by the process parameters. Higher temperature and lower WHSV in the hydrocracking facilitated higher i-paraffin content and slightly lower average carbon numbers in the C4-C9 range paraffins, when comparing to samples with similar distillation range. By measure of the set quality parameters, better gasoline fuel component was obtained at higher hydrocracking temperatures and lower WHSV. Due to low volumes of the samples, the octanes were determined from blends with a commercial gasoline component having high i-paraffin content, referred to as "2$^{nd}$ component". The blending octane numbers for bRON samples were calculated using the following equation:

$$bRON_{sample} = \frac{blendRON_{measured} - \left( \frac{2nd\ component\ vol\% * RON_{2nd\ component}}{100} \right)}{\left[ \frac{sample\ vol\%}{100} \right]}$$

The blend RON and MON for the sample G5 of the gasoline fuel component (120 °C cut) were 66.7 and 55.5, respectively. The corresponding values for the sample G7 (150 °C cut) were 59.1 and 56.7. Sample G7 had higher i-paraffin content and i- to n-paraffin ratio, but the average carbon number was higher for both the i- and n-paraffins. The average carbon number in the C4-C9 range paraffins, especially of C4-C9 n-paraffins, seemed to have a bigger impact on the RON than the i-paraffin content. The reference gasoline RG properties describing the product quality were inferior to the test run gasoline fuel components. The measured test run gasoline fuel components (samples G3, G5, and G7) had significantly higher blend octane ratings than the reference gasoline RG (bRON = 46.8 and bMON = 45.3), determined from similar blend using the same methods.

Comparing the bRON and bMON results of samples derived from hydrocracking feeds B and C reveals the effect of the characteristics of the hydrocracking feeds (reported in Table 1) and of the chemical composition of the gasoline fuel components (reported in Tables 3 and 4) on the gasoline fuel component quality in terms of octane numbers (reported in Table 6). The most promising hydrocracking feed B derived gasoline fuel component (G3) was compared to the two hydrocracking feed C derived gasoline fuel components (G5 and G7), the gasoline fuel component samples were obtained from similar process conditions (with slight variation in the hydrocracking temperature). The paraffin contents were very similar between the samples despite varying end cut points of the gasoline fuel components. The C4-C9 i-paraffin content was in the range from 68 to 71 vol-%, and n-paraffins from 26 to 29 vol-%. The relative multiple-branched i-paraffin content was increased with increasing end cut point of the gasoline fuel component sample, suggesting that the longer paraffins underwent higher degree isomerisation in the process. Comparison was again made to the same paraffinic reference gasoline RG, which had lower C4-C9 i-paraffin content of about 49 vol-%, and higher n-paraffin content of about 42 vol-%.

Table 6. Octane numbers and distillation ranges of the gasoline fuel components G3, G5, G7, and the reference gasoline RG.

| Sample | G3 | G5 | G7 | RG Reference paraffinic gasoline |
|---|---|---|---|---|
| Dist. range approx. (°C) | IBP to ca. 100 | IBP to ca. 120 | IBP to ca. 150 | ca. 47 to ca. 170 |
| bRON | 57.9 | 66.7 | 59.1 | 46.8 |
| bMON | 56.3 | 55.5 | 56.7 | 45.3 |

The bRON differences can be explained in part by assessing the carbon number distribution (Tables 3 and 4). However, the analyzed samples G3, G5 and G7 have similar low C4-C9 n-paraffin average carbon numbers (5.7-5.9) while more variations can be seen in the C4-C9 i-paraffin average carbon numbers (6.6-7.0). The reference gasoline fuel component RG has similar C4-C9 i-paraffin average carbon number as G3, G5 and G7, but far higher C4-C9 range n-paraffin average carbon number (6.3). Like mentioned above, the RON rating increases with degree of isomerisation and lower carbon number (shorter carbon chain length). Thus, one important differentiating factor between the octane ratings of the gasoline fuel components according to the present disclosure and the reference gasoline fuel components was the average C4-C9 range n-paraffin carbon number. The G3 gasoline fuel component and G7 gasoline fuel component have similar blend octane ratings, although the average C4-C9 range i-paraffin carbon number was lower in G3 gasoline fuel component, this was balanced out with the lower average C4-C9 range n-paraffin carbon number of G7 gasoline fuel component. The C4 content was relatively high with the G5 and G7 gasoline fuel components, contributing significantly to the average carbon numbers of the C4-C9 range n-paraffins and to the measured octane ratings. With the information at hand, the amount of C4 compounds cannot be attributed to the used hydrocracking feed as the difference might arise from the selected IBPs, influenced e.g. by different degassing and/or distillation procedures used to obtain the products.

Based on the hydrocracking test runs with the different feeds, it can be said that the feeds have some impact on the gasoline fuel component quality. The gasoline fuel components obtained by the process involving hydrocracking of paraffinic stream having high degree of isomerisation have inter alia far better octane numbers than the paraffinic reference gasoline component. Overall, the test runs have shown that lower WHSV and/or higher temperature at the hydrocracking improve the gasoline fuel component yields, and may also improve the properties for gasoline fuel applications, with less influence by the hydrocracking feed, while lower distillation end point (e.g. T90, T95 and/or FBP) and lower average carbon number of C4-C9 range paraffins, especially of C4-C9 range n-paraffins, may improve the octane rating.

Various embodiments have been presented. It should be appreciated that in this document, words comprise, include, and contain are each used as open-ended expressions with no intended exclusivity.

**Claims**

1. A gasoline fuel component comprising n-paraffins, monobranched i-paraffins, and multiple-branched i-paraffins, wherein

   the sum amount of C4-C9 n-paraffins, C4-C9 mono-branched i-paraffins, and C4-C9 multiple-branched i-paraffins is more than 90 wt-% of the total gasoline fuel component weight, and wherein
   the weight ratio of C8 i-paraffins to C8 n-paraffins is at least 4.0, preferably at least 4.5, further preferably at least 5.0, more preferably at least 5.5, even more preferably at least 6.0, and optionally the sum amount of C8 n-paraffins and C8 i-paraffins is at least 1.0 wt-%, preferably at least 2.5 wt-%, further preferably at least 5.0 wt-%, more preferably at least 5.5 wt-%, even more preferably at least 6.0 wt-%, most preferably at least 7.0 wt-% of the total gasoline fuel component weight; and wherein
   a carbon number distribution of the paraffins in the gasoline fuel component covers at least three adjacent carbon numbers within a C4-C9 range.

2. The gasoline fuel component according to claim 1, wherein the gasoline fuel component comprises at least 0.1 wt-%, preferably at least 0.3 wt-%, more preferably at least 0.5 wt-%, even more preferably at least 0.6 wt-% C8 n-paraffins, and/or the ratio of C8 i-paraffins to C8 n-paraffins is at most 70, preferably at most 60, further preferably at most 50, more preferably at most 40, even more preferably at most 30.

3. The gasoline fuel component according to claim 1 or 2, wherein the gasoline fuel component comprises at least C6, C7 and C8 paraffins and the weight ratio of C6-C8 i-paraffins to C6-C8 n-paraffins is at least 2.7, preferably at least 2.8, more preferably at least 3.0, and optionally the sum amount of C6-C8 n-paraffins and C6-C8 i-paraffins is at least 50 wt-%, preferably at least 55 wt-%, more preferably at least 58 wt-% of the total gasoline fuel component weight.

4. The gasoline fuel component according to any one of the preceding claims, wherein the weight ratio of C6-C9 multiple-branched i-paraffins to C6-C9 n-paraffins is at least 0.2, preferably at least 0.3, more preferably at least 0.4, even more preferably at least 0.5.

5. The gasoline fuel component according to any one of the preceding claims, comprising at least 50 wt-%, preferably at least 55 wt-%, more preferably at least 60 wt-%, even more preferably at least 65 wt-% C4-C9 i-paraffins of the total gasoline fuel component weight; and/or at least 5 wt-%, preferably at least 6 wt-%, more preferably at least 7 wt-%, even more preferably at least 10 wt-%, or at least 11 wt-%, C6-C9 multiple-branched i-paraffins of the total gasoline fuel component weight; and/or
   wherein the sum amount of C4-C9 n-paraffins, C4-C9 mono-branched i-paraffins and C4-C9 multiple-branched i-paraffins is more than 93 wt-%, preferably more than 95 wt-%, more preferably within a range from 95 to 99 wt-% of the total gasoline fuel component weight.

6. The gasoline fuel component according to any one of the preceding claims, wherein the bRON of said gasoline fuel component, as determined according to ASTM D2699-18, is at least 51, preferably at least 55, and/or the bMON of said gasoline fuel component, as determined according to ASTMD2700-19, is at least 48, preferably at least 50, more preferably at least 55.

7. The gasoline fuel component according to any one of the preceding claims, wherein the average carbon number of C4-C9 i-paraffins is more than 6.0, preferably at least 6.2, more preferably within a range from 6.2 to 8.0, and/or wherein the average carbon number of C4-C9 n-paraffins is at most 6.0, preferably at most 5.6, and preferably at least 0.5 units lower, more preferably at least 0.6 units lower than the average carbon number of C4-C9 i-paraffins; and/or wherein the C6 n-paraffin content is at most 11 wt-%, preferably at most 8 wt-% of the total gasoline fuel component weight, and/or the weight ratio of C6 i-paraffins to C6 n-paraffin is at least 1.5, preferably at least 1.7.

8. The gasoline fuel component according to any one of the preceding claims, wherein

the biogenic carbon content of the gasoline fuel component, as determined according to EN 16640 (2017), is at least 50 wt-%, preferably at least 70 wt-%, further preferably at least 90 wt-%, more preferably at least 95 wt-%, even more preferably about 100 wt-%, based on the total weight of carbon (TC) in the gasoline fuel component; and/or
the difference between T90 temperature (90 vol-% recovered, as determined according to ASTM D7096-19) and T10 temperature (10 vol-% recovered, as determined according to ASTM D7096-19) is at least 60 °C, more preferably at least 70 °C, even more preferably at least 80 °C or at least 100 °C, such as within a range from 60 to 140 °C.

9. The gasoline fuel component according to any one of the preceding claims, obtainable by a process comprising

providing a paraffinic hydrocarbon feed, preferably obtained by hydrodeoxygenation of an oxygenated hydrocarbon feed typically comprising vegetable oils, animal fats, and/or microbial oils and optionally followed by gas-liquid separation and/or paraffinic feed fractionation(s), and
subjecting the paraffinic hydrocarbon feed to at least hydroisomerisation, preferably to hydroisomerisation and hydrocracking, followed by fractionation, and recovering from the fractionation at least the gasoline fuel component, and/or

obtainable by a process comprising

providing a paraffinic hydrocarbon feed comprising at least 60 wt-% paraffins of the total weight of the paraffinic hydrocarbon feed, of which paraffins at most 30 wt-% are i-paraffins;
subjecting the paraffinic hydrocarbon feed in a first reaction section, preferably in a first reactor, to hydroisomerisation in the presence of a hydroisomerisation catalyst to obtain a hydroisomerisation effluent;
subjecting a second reaction section feed comprising at least a portion of the hydroisomerisation effluent to hydrocracking in a second reaction section, preferably in a second reactor, in the presence of a hydrocracking catalyst to obtain a hydrocracking effluent;
subjecting the hydrocracking effluent, and optionally a portion of the hydroisomerisation effluent, to fractionation, and recovering from the fractionation at least the gasoline fuel component, and optionally an aviation fuel component.

10. Use of a gasoline fuel component according to any one of claims 1 to 9 in a gasoline fuel composition.

11. A gasoline fuel composition comprising a gasoline fuel component according to any one of claims 1 to 9.

12. Use according to claim 10 or the gasoline fuel composition according to claim 11, wherein said gasoline fuel composition comprises at least one or more of oxygenated gasoline fuel component(s) and/or hydrocarbon cut(s), preferably at least one or more of ethanol, propanol, i-propanol, butanol, i-butanol, tert-butanol, pentanol, i-pentanol, MTBE, ETBE, TAME, TAEE, butane, alkylate, isomerate, raffinate, FCC gasoline, reformate, pygas and/or light straight-run (LSR) gasoline.

13. Use according to claim 10 or 12 or the gasoline fuel composition according to claim 11 or 12, wherein said gasoline fuel composition fulfills the requirements for gasoline fuels set in Directive 2009/30/EC, and optionally in EN228:2012 amended 2017; and/or wherein said gasoline fuel composition comprises the gasoline fuel component according to any one of claims 1 to 9 in an amount from 1 to 25 %-vol, preferably from 1 to 20 %-vol of the total gasoline fuel composition volume.

14. Use of a gasoline fuel component according to any one of claims 1 to 9 in feedstock(s) for industrial conversion process(es), preferably in thermal cracking feedstock(s) and/or in catalytic cracking feedstock(s), in solvent(s), in carrier(s), in dispersant composition(s), in demulsifier(s), in extractant(s), in detergent(s), in degreasing composition(s), in cleaner(s), in thinner(s), in penetrating oil(s), in anticorrosion composition(s), in multipurpose oil(s), in metal working, in agriculture, in construction, in electronics, in medical appliance(s), in composition(s) for car, electrical, textile, packaging, paper, and/or pharmaceutical industry, and/or in manufacture of intermediate(s) therefor.

15. Use according to any one of claims 10, 12, 13 or 14, or the gasoline fuel composition according to any one of claims 11 to 13, or the gasoline fuel component according to any one of claims 1 to 9, wherein the gasoline fuel component or the gasoline fuel composition is additized with at least one or more of antioxidant(s), stabilizer(s), detergent(s), corrosion inhibitor(s), friction modifier(s), metal deactivator(s), and/or fuel dye(s).

## Patentansprüche

1. Benzinkraftstoffkomponente, die n-Paraffine, einfach verzweigte i-Paraffine und mehrfach verzweigte i-Paraffine umfasst, wobei

   die Gesamtmenge aus C4-C9 n-Paraffinen, C4-C9-einfach verzweigten i-Paraffinen und C4-C9-mehrfach verzweigten i-Paraffinen mehr als 90 Gew.-% des Gesamtgewichts der Benzinkraftstoffkomponente beträgt und wobei
   das Gewichtsverhältnis von C8 i-Paraffinen zu C8 n-Paraffinen zumindest 4,0, vorzugsweise zumindest 4,5, weiter bevorzugt zumindest 5,0, noch bevorzugter zumindest 5,5, noch weiter bevorzugt zumindest 6,0 beträgt und optional die Gesamtmenge der C8 n-Paraffine und C8 i-Paraffine zumindest 1,0 Gew.-% beträgt, vorzugsweise zumindest 2,5 Gew.-%, weiter bevorzugt zumindest 5,0 Gew.-%, noch weiter bevorzugt zumindest 5,5 Gew.-%, noch weiter bevorzugt zumindest 6,0 Gew.-%, am meisten bevorzugt zumindest 7,0 Gew.-% des Gesamtgewichts der Benzinkraftstoffkomponente beträgt; und wobei
   eine Verteilung der Kohlenstoffanzahl der Paraffine in der Benzinkraftstoffkomponente zumindest drei benachbarte Kohlenstoffzahlen innerhalb eines C4-C9-Bereichs abdeckt.

2. Benzinkraftstoffkomponente nach Anspruch 1, wobei die Benzinkraftstoffkomponente zumindest 0,1 Gew.-%, vorzugsweise zumindest 0,3 Gew.-%, noch bevorzugter zumindest 0,5 Gew.-%, noch bevorzugter zumindest 0,6 Gew.-% C8 n-Paraffine umfasst, und/oder das Verhältnis von C8 i-Paraffinen zu C8 n-Paraffinen höchstens 70, vorzugsweise höchstens 60, weiter bevorzugt höchstens 50, noch bevorzugter höchstens 40, noch bevorzugter höchstens 30 beträgt.

3. Benzinkraftstoffkomponente nach Anspruch 1 oder 2, wobei die Benzinkraftstoffkomponente zumindest C6-, C7- und C8-Paraffine umfasst und das Gewichtsverhältnis von C6-C8 i-Paraffinen zu C6-C8 n-Paraffinen zumindest 2,7, vorzugsweise zumindest 2,8, weiter bevorzugt zumindest 3,0 beträgt und optional die Gesamtmenge aus C6-C8 n-Paraffinen und C6-C8 i-Paraffinen zumindest 50 Gew.-%, vorzugsweise zumindest 55 Gew.-%, noch bevorzugter zumindest 58 Gew.-% des Gesamtgewichts der Benzinkraftstoffkomponente beträgt.

4. Benzinkraftstoffkomponente nach einem der vorhergehenden Ansprüche, wobei das Gewichtsverhältnis von mehrfach verzweigten C6-C9 i-Paraffinen zu C6-09 n-Paraffinen zumindest 0,2, vorzugsweise zumindest 0,3, noch bevorzugter zumindest 0,4, noch bevorzugter zumindest 0,5 beträgt.

5. Benzinkraftstoffkomponente nach einem der vorhergehenden Ansprüche, umfassend zumindest 50 Gew.-%, vorzugsweise zumindest 55 Gew.-%, noch bevorzugter zumindest 60 Gew.-%, noch bevorzugter zumindest 65 Gew.-% C6-C9 i-Paraffine, bezogen auf das Gesamtgewicht des Kraftstoffs; und/oder zumindest 5 Gew.-%, vorzugsweise zumindest 6 Gew.-%, noch bevorzugter zumindest 7 Gew.-%, noch bevorzugter zumindest 10 Gew.-% oder zumindest 11 Gew.-% mehrfach verzweigte C6-C9 i-Paraffine, bezogen auf das Gesamtgewicht des Kraftstoffs; und/oder
   wobei die Gesamtmenge an C4-C9 n-Paraffinen, C4-C9-einfach verzweigten i-Paraffinen und C4-C9-mehrfach verzweigten i-Paraffinen mehr als 93 Gew.-%, vorzugsweise mehr als 95 Gew.-%, noch bevorzugter in einem Bereich von 95 bis 99 Gew.-% des Gesamtgewichts des Kraftstoffs beträgt.

**6.** Benzinkraftstoffkomponente nach einem der vorhergehenden Ansprüche, wobei der bRON-Wert der Benzinkraftstoffkomponente, wie gemäß ASTM D2699-18 bestimmt, zumindest 51, vorzugsweise zumindest 55 beträgt und/oder der bMON der Benzinkraftstoffkomponente, wie gemäß ASTM D2700-19 bestimmt, zumindest 48, vorzugsweise zumindest 50, noch bevorzugter zumindest 55 beträgt.

**7.** Benzinkraftstoffkomponente nach einem der vorhergehenden Ansprüche, wobei die durchschnittliche Kohlenstoffanzahl der C4-C9 i-Paraffine mehr als 6,0, vorzugsweise zumindest 6,2, noch bevorzugter in einem Bereich von 6,2 bis 8,0 beträgt, und/oder wobei die durchschnittliche Kohlenstoffanzahl der C4-C9 n-Paraffine höchstens 6,0, vorzugsweise höchstens 5,6, und vorzugsweise zumindest 0,5 Einheiten niedriger, noch bevorzugter zumindest 0,6 Einheiten niedriger als die durchschnittliche Kohlenstoffanzahl der C4-C9 i-Paraffine ist; und/oder
wobei der C6 n-Paraffingehalt höchstens 11 Gew.-%, vorzugsweise höchstens 8 Gew.-% des Gesamtgewichts des Kraftstoffs beträgt und/oder das Gewichtsverhältnis von C6 i-Paraffinen zu C6 n-Paraffin zumindest 1,5, vorzugsweise zumindest 1,7 beträgt.

**8.** Benzinkraftstoffkomponente nach einem der vorhergehenden Ansprüche, wobei

der biogene Kohlenstoffgehalt der Benzinkraftstoffkomponente, wie gemäß EN 16640 (2017) bestimmt, zumindest 50 Gew.-%, vorzugsweise zumindest 70 Gew.-%, weiter bevorzugt zumindest 90 Gew.-%, noch bevorzugter zumindest 95 Gew.-%, noch bevorzugter etwa 100 Gew.-%, bezogen auf das Gesamtgewicht an Kohlenstoff (TC) in der Benzinkraftstoffkomponente, beträgt; und/oder
die Differenz zwischen der T90-Temperatur (90 Vol.-% Rückgewinnung, bestimmt nach ASTM D7096-19) und der T10-Temperatur (10 Vol.-% Rückgewinnung, bestimmt nach ASTM D7096-19) zumindest 60°C, vorzugsweise zumindest 70°C, noch bevorzugter zumindest 80°C oder zumindest 100°C beträgt, beispielsweise in einem Bereich von 60 bis 140°C liegt.

**9.** Benzinkraftstoffkomponente nach einem der vorhergehenden Ansprüche, erhältlich durch einen Prozess, der umfasst

Bereitstellen eines paraffinischen Kohlenwasserstoff-Einsatzmaterials, vorzugsweise erhalten durch Hydrodeoxygenierung eines oxygenierten Kohlenwasserstoff-Einsatzmaterials, typischerweise umfassend pflanzliche Öle, tierische Fette und/oder mikrobielle Öle, und optional gefolgt von einer Gas-Flüssig-Trennung und/oder Fraktionierung(en) des paraffinischen Einsatzmaterials, und
Unterziehen des paraffinischen Kohlenwasserstoff-Einsatzmaterials zumindest einer Hydroisomerisierung, vorzugsweise einer Hydroisomerisierung und einem Hydrocracken, gefolgt von einer Fraktionierung, und
Gewinnen zumindest der Benzinkraftstoffkomponente aus der Fraktionierung, und/oder
erhältlich durch einen Prozess, der umfasst

Bereitstellen eines paraffinischen Kohlenwasserstoff-Einsatzmaterials, das zumindest 60 Gew.-% Paraffine des Gesamtgewichts des paraffinischen Kohlenwasserstoff-Einsatzmaterials umfasst, von denen höchstens 30 Gew.-% i-Paraffine sind;
Unterziehen des paraffinischen Kohlenwasserstoff-Einsatzmaterials in einer ersten Reaktionsstufe, vorzugsweise in einem ersten Reaktor, einer Hydroisomerisierung in Gegenwart eines Hydroisomerisierungskatalysators, um ein Hydroisomerisierungs-Ausströmmmaterial zu erhalten;
Unterziehen eines Einsatzmaterials für einen zweiten Reaktionsabschnitt, das zumindest einen Teil des Hydroisomerisierungs-Ausströmmmaterial umfasst, einem Hydrocracken in einem zweiten Reaktionsabschnitt, vorzugsweise in einem zweiten Reaktor, in Gegenwart eines Hydrocrackkatalysators, um ein Hydrocrack-Ausströmmaterial zu erhalten;
Unterziehen des Hydrocrack-Ausströmmaterials und optional eines Teils des Hydroisomerisierungs-Ausströmmaterials einer Fraktionierung und Gewinnen zumindest der Benzinkraftstoffkomponente und optional einer Flugkraftstoffkomponente aus der Fraktionierung.

**10.** Verwendung einer Benzinkraftstoffkomponente nach einem der Ansprüche 1 bis 9 in einer Benzinkraftstoffzusammensetzung.

**11.** Benzinkraftstoffzusammensetzung, die eine Benzinkraftstoffkomponente nach einem der Ansprüche 1 bis 9 enthält.

**12.** Verwendung nach Anspruch 10 oder der Benzinkraftstoffzusammensetzung nach Anspruch 11, wobei die Benzinkraftstoffzusammensetzung zumindest eine oder mehrere sauerstoffhaltige Benzinkraftstoffkomponente(n) und/oder Kohlenwasserstofffraktion(en) umfasst, vorzugsweise zumindest eines oder mehrere aus Ethanol, Propanol, i-Propanol, Butanol, i-Butanol, tert-Butanol, Pentanol, i-Pentanol, MTBE, ETBE, TAME, TAEE, Butan, Alkylat, Isomerat, Raffinat, FCC-Benzin, Reformat, Pygas und/oder leichtes Straight-Run-Benzin (LSR; "light straight-run gasoline") umfasst.

13. Verwendung nach Anspruch 10 oder 12 oder Benzinkraftstoffzusammensetzung nach Anspruch 11 oder 12, wobei die Benzinkraftstoffzusammensetzung die Anforderungen für Kraftstoffe nach der Richtlinie 2009/30/EG und optional nach EN228:2012, geändert 2017, erfüllt; und/oder
wobei die Benzinkraftstoffzusammensetzung die Benzinkraftstoffkomponente nach einem der Ansprüche 1 bis 9 in einer Menge von 1 bis 25 Vol.-%, vorzugsweise von 1 bis 20 Vol.-%, des Gesamtvolumens der Benzinkraftstoffzusammensetzung umfasst.

14. Verwendung einer Benzinkraftstoffkomponente nach einem der Ansprüche 1 bis 9 in Einsatzmaterial(ien) für industrielle(n) Umwandlungsprozess(e), vorzugsweise in thermischen Crack-Einsatzmaterial(ein) und/oder in katalytischen Crack-Einsatzmaterial(ein), in Lösungsmittel(n), in Träger(n), in Dispergiermittelzusammensetzung(en), in Demulgator(en), in Extraktionsmittel(n), in Detergenz(ien), in Entfettungsmittelzusammensetzung(en), in Reinigungsmittel(n), in Verdünner(n), in Kriechöl(en), in Korrosionsschutzzusammensetzung(en), in Mehrzwecköl(en), in der Metallbearbeitung, in der Landwirtschaft, im Bauwesen, in der Elektronik, in medizinischen Gerät(en), in Zusammensetzung(en) für die Automobil-, Elektro-, Textil-, Verpackungs-, Papier- und/oder Pharmaindustrie und-/oder bei der Herstellung von Zwischenprodukt(en) dafür.

15. Verwendung nach einem der Ansprüche 10, 12, 13 oder 14 oder Benzinkraftstoffzusammensetzung nach einem der Ansprüche 11 bis 13 oder Benzinkraftstoffkomponente nach einem der Ansprüche 1 bis 9, wobei die Benzinkraftstoffkomponente oder die Benzinkraftstoffzusammensetzung mit zumindest einem oder mehreren aus Antioxidanz(ien), Stabilisator(en), Detergenz(ien), Korrosionsinhibitor(en), Reibungsmodifikator(en), Metalldeaktivator(en) und/oder Kraftstoff-Farbstoff(en) additiviert ist.

**Revendications**

1. Composant de carburant essence comprenant des n-paraffines, des i-paraffines mono-ramifiées et des i-paraffines multi-ramifiées, dans lequel

la somme des paraffines n en C4-C9, des paraffines i mono-ramifiées en C4-C9 et des paraffines i multi-ramifiées en C4-C9 est supérieure à 90 % en poids du poids total du composant de carburant essence, et dans lequel le rapport pondéral des paraffines i en C8 aux paraffines n en C8 est d'au moins 4.0, de préférence d'au moins 4.5, de préférence encore d'au moins 5.0, de préférence encore d'au moins 5.5, de préférence encore d'au moins 6.0, et éventuellement la somme des paraffines n en C8 et des paraffines i en C8 est d'au moins 1.0% en poids, de préférence au moins 2.5 % en poids, de préférence encore au moins 5.0 % en poids, de préférence encore au moins 5.5 % en poids, de préférence encore au moins 6.0 % en poids, de préférence encore au moins 7.0 % en poids du poids total du composant de carburant essence ; et dans lequel la distribution des nombres de carbones des paraffines dans le composant de carburant essence couvre au moins trois nombres de carbones adjacents dans une plage C4-C9.

2. Le composant de carburant essence selon la revendication 1, dans lequel le composant de carburant essence comprend au moins 0.1 % en poids, de préférence au moins 0.3 % en poids, plus préférablement au moins 0.5 % en poids, encore plus préférablement au moins 0.6 % en poids de paraffines n-C8, et/ou le rapport des paraffines i-C8 aux paraffines n-C8 est au plus de 70, de préférence au plus de 60, de préférence encore au plus de 50, de préférence encore au plus de 40, de préférence encore au plus de 30.

3. Composant de carburant essence selon la revendication 1 ou 2, dans lequel le composant de carburant essence comprend au moins des paraffines en C6, C7 et C8 et le rapport pondéral des paraffines en C6-C8 i aux paraffines en C6-C8 n est d'au moins 2.7, de préférence d'au moins 2.8, de préférence au moins 3.0, et éventuellement la somme des paraffines n en C6-C8 et des paraffines i en C6-C8 est d'au moins 50 % en poids, de préférence d'au moins 55 % en poids, de préférence d'au moins 58 % en poids du poids total du composant de carburant essence.

4. Composant de carburant essence selon l'une quelconque des revendications précédentes, dans lequel le rapport pondéral entre les i-paraffines multi-ramifiées en C6-C9 et les n-paraffines en C6-C9 est d'au moins 0.2, de préférence d'au moins 0.3, plus préférablement d'au moins 0.4, et encore plus préférablement d'au moins 0.5.

5. Composant de carburant essence selon l'une quelconque des revendications précédentes, comprenant au moins 50 % en poids, de préférence au moins 55 % en poids, de préférence encore au moins 60 % en poids, de préférence encore au moins 65 % en poids d'i-paraffines en C4-C9 par rapport au poids total du composant de carburant essence ; et/ou au moins 5 % en poids, de préférence au moins 6 % en poids, plus préférablement au moins 7 % en poids, encore plus préférablement au moins 10 % en poids, ou au moins 11 % en poids, d'i-paraffines multi-ramifiées en C6-C9 par rapport au poids total du composant carburant essence ; et/ou

dans lequel la somme des paraffines en C4-C9, des paraffines mono-ramifiées en C4-C9 et des paraffines multi-ramifiées en C4-C9 est supérieure à 93 % en poids, de préférence supérieure à 95 % en poids, et plus préférablement comprise entre 95 et 99 % en poids du poids total des composants du carburant essence.

6. Composant de carburant essence selon l'une quelconque des revendications précédentes, dans lequel le bRON dudit composant de carburant essence, tel que déterminé selon la norme ASTM D2699-18, est d'au moins 51, de préférence d'au moins 55, et/ou le bMON dudit composant de carburant essence, tel que déterminé selon la norme ASTM D2700-19, est d'au moins 48, de préférence d'au moins 50, plus préférablement d'au moins 55.

7. Le composant de carburant essence selon l'une quelconque des revendications précédentes, dans lequel le nombre moyen d'atomes de carbone des paraffines i en C4-C9 est supérieur à 6.0, de préférence d'au moins 6.2, plus préférablement compris entre 6.2 et 8.0, et/ou dans lequel le nombre moyen d'atomes de carbone des paraffines n en C4-C9 est au plus égal à 6.0, de préférence au plus égal à 5.6, et de préférence inférieur d'au moins 0.5 unité, de préférence inférieur d'au moins 0.6 unité au nombre moyen d'atomes de carbone des paraffines i en C4-C9 ; et/ou dans lequel la teneur en paraffine n-C6 est au plus de 11 % en poids, de préférence au plus de 8 % en poids du poids total du composant carburant essence, et/ou le rapport pondéral entre les paraffines i-C6 et la paraffine n-C6 est d'au moins 1.5, de préférence d'au moins 1.7.

8. Composant de carburant essence selon l'une quelconque des revendications précédentes, dans lequel la teneur en carbone biogénique du composant de carburant essence, telle que déterminée selon la norme EN 16640 (2017), est d'au moins 50 % en poids, de préférence d'au moins 70 % en poids, de préférence encore d'au moins 90 % en poids, de préférence davantage d'au moins 95 % en poids, de préférence encore d'environ 100 % en poids, sur la base du poids total de carbone (TC) dans le composant carburant essence ; et/ou

la différence entre la température T90 (90 % en volume récupéré, déterminée selon la norme ASTM D7096-19) et la température T10 (10 % en volume récupéré, déterminée selon la norme ASTM D7096-19) est d'au moins 60°C, de préférence d'au moins 70°C, encore mieux d'au moins 80°C ou d'au moins 100°C, par exemple dans une plage comprise entre 60 et 140°C.

9. Le composant de carburant essence selon l'une quelconque des revendications précédentes, pouvant être obtenu par un procédé comprenant

fournir une charge d'hydrocarbures paraffiniques, de préférence obtenue par hydro-désoxygénation d'une charge d'hydrocarbures oxygénés comprenant typiquement des huiles végétales, des graisses animales et/ou des huiles microbiennes, suivie éventuellement d'une séparation gaz-liquide et/ou d'un ou plusieurs fractionnements de la charge paraffinique, et

soumettre la charge d'hydrocarbures paraffiniques à au moins une hydroisomérisation, de préférence à une hydroisomérisation et à un hydrocraquage, suivis d'un fractionnement, et récupérer à partir du fractionnement au moins le composant carburant essence, et/ou

obtenable par un procédé comprenant

fournir une charge d'hydrocarbures paraffiniques comprenant au moins 60 % en poids de paraffines par rapport au poids total de la charge d'hydrocarbures paraffiniques, dont au plus 30 % en poids sont des i-paraffines ;

soumettre la charge d'hydrocarbures paraffiniques dans une première section de réaction, de préférence dans un premier réacteur, à une hydroisomérisation en présence d'un catalyseur d'hydroisomérisation pour obtenir un effluent d'hydroisomérisation ;

soumettre une charge d'une deuxième section de réaction comprenant au moins une partie de l'effluent d'hydroisomérisation à un hydrocraquage dans une deuxième section de réaction, de préférence dans un deuxième réacteur, en présence d'un catalyseur d'hydrocraquage pour obtenir un effluent d'hydrocraquage ;

soumettre l'effluent d'hydrocraquage, et éventuellement une partie de l'effluent d'hydroisomérisation, à un fractionnement, et récupérer à partir du fractionnement au moins le composant carburant essence, et éventuellement un composant carburant aviation.

**10.** Utilisation d'un composant de carburant essence selon l'une quelconque des revendications 1 à 9 dans une composition de carburant essence.

**11.** Composition de carburant essence comprenant un composant de carburant essence selon l'une quelconque des revendications 1 à 9.

**12.** Utilisation selon la revendication 10 ou composition de carburant essence selon la revendication 11, dans laquelle ladite composition de carburant essence comprend au moins un ou plusieurs composants de carburant essence oxygénés et/ou fractions d'hydrocarbures, de préférence au moins un ou plusieurs des composants suivants : éthanol, propanol, i-propanol, butanol, i-butanol, tert-butanol, pentanol, i-pentanol, MTBE, ETBE, TAME, TAEE, butane, alkylate, isomérate, raffinate, essence FCC, reformate, pygas et/ou essence légère de distillation directe (LSR).

**13.** Utilisation selon la revendication 10 ou 12 ou composition de carburant essence selon la revendication 11 ou 12, dans laquelle ladite composition de carburant essence satisfait aux exigences relatives aux carburants essence fixées dans la directive 2009/30/CE, et éventuellement dans la norme EN228:2012 modifiée en 2017 ; et/ou dans laquelle ladite composition de carburant essence comprend le composant de carburant essence selon l'une quelconque des revendications 1 à 9 en une quantité de 1 à 25 % en volume, de préférence de 1 à 20 % en volume du volume total de la composition de carburant essence.

**14.** Utilisation d'un composant de carburant essence selon l'une quelconque des revendications 1 à 9 dans une ou plusieurs matières premières pour un ou plusieurs procédés de conversion industrielle, de préférence dans une ou plusieurs matières premières de craquage thermique et/ou dans une ou plusieurs matières premières de craquage catalytique, dans des solvants, dans des véhicules, dans des compositions dispersantes, dans des désémulsifiants, dans des agents d'extraction, dans des détergents, dans des compositions dégraissantes, dans des nettoyants, dans des diluants, dans des huiles pénétrantes, dans des compositions anticorrosion, dans des huiles polyvalentes, dans le travail des métaux, dans l'agriculture, dans la construction, dans l'électronique, dans des appareils médicaux, dans des compositions pour l'industrie automobile, électrique, textile, de l'emballage, du papier et/ou pharmaceutique, et/ou dans la fabrication d'intermédiaires pour ceux-ci.

**15.** Utilisation selon l'une quelconque des revendications 10, 12, 13 ou 14, ou composition de carburant essence selon l'une quelconque des revendications 11 à 13, ou le composant de carburant essence selon l'une quelconque des revendications 1 à 9, dans lequel le composant de carburant essence ou la composition de carburant essence est additivé avec au moins un ou plusieurs antioxydants, stabilisants, détergents, inhibiteurs de corrosion, modificateurs de friction, désactivateurs de métaux et/ou colorants de carburant.

Fig. 1

Fig. 2

## REFERENCES CITED IN THE DESCRIPTION

**Patent documents cited in the description**

- US 9039790 B
- US 9567264 B
- US 2011319683 A
- US 4244704 A

- FI 100248 B
- EP 1741768 A1
- EP 2155838 B1
- FI 129220 B1

**Non-patent literature cited in the description**

- Comprehensive two-dimensional gas chromatography with mass spectrometric and flame ionization detectors in petroleum chemistry. **NOUSIAINEN M.** Master's Thesis. University of Helsinki, August 2017